(19) Europäisches Patentamt / European Patent Office / Office européen des brevets

(11) **EP 4 391 338 A1**

(12) # EUROPEAN PATENT APPLICATION
published in accordance with Art. 153(4) EPC

(43) Date of publication:
**26.06.2024 Bulletin 2024/26**

(21) Application number: **22944256.1**

(22) Date of filing: **31.05.2022**

(51) International Patent Classification (IPC):
***H02M 3/07*** (2006.01)

(52) Cooperative Patent Classification (CPC):
**H02M 3/07**

(86) International application number:
**PCT/CN2022/096473**

(87) International publication number:
**WO 2023/230920 (07.12.2023 Gazette 2023/49)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Huawei Digital Power Technologies Co., Ltd.**
**Shenzhen, Guangdong 518043 (CN)**

(72) Inventors:
• **OU, Shousong**
  **Shenzhen, Guangdong 518043 (CN)**
• **CHEN, Haitao**
  **Shenzhen, Guangdong 518043 (CN)**

(74) Representative: **Gill Jennings & Every LLP**
**The Broadgate Tower**
**20 Primrose Street**
**London EC2A 2ES (GB)**

(54) **DC/DC CONVERSION CIRCUIT, DC/DC CONVERTER AND POWER SUPPLY DEVICE**

(57) This application provides a DC/DC conversion circuit, a DC/DC converter, and a power supply device. The DC/DC conversion circuit includes a first terminal, a second terminal, and a first resonance unit. The first resonance unit has a first port, a second port, a third port, and a fourth port. The first port is connected to the first terminal of the DC/DC conversion circuit, and the second port and the third port are connected to the second terminal of the DC/DC conversion circuit. The fourth port is connected to a reference ground of the DC/DC conversion circuit. One end of a first switch bridge arm of the first resonance unit is connected to the first port, and the other end of the first switch bridge arm of the first resonance unit is connected to the second port. One end of a second switch bridge arm of the first resonance unit is connected to the third port, and the other end of the second switch bridge arm of the first resonance unit is connected to the fourth port. The first capacitor of the first resonance unit is connected between the third port and the fourth port. By implementing this application, a loss can be reduced, and conversion efficiency is high.

FIG. 3

**Description**

**TECHNICAL FIELD**

This application relates to the field of power supply technologies, and in particular, to a DC/DC conversion circuit, a DC/DC converter, and a power supply device.

**BACKGROUND**

A DC/DC conversion circuit is a voltage conversion circuit that converts an input direct-current voltage into a specified direct-current voltage and outputs the specified direct-current voltage, to resolve a problem that a supply voltage of a power supply does not match a voltage required by a load.

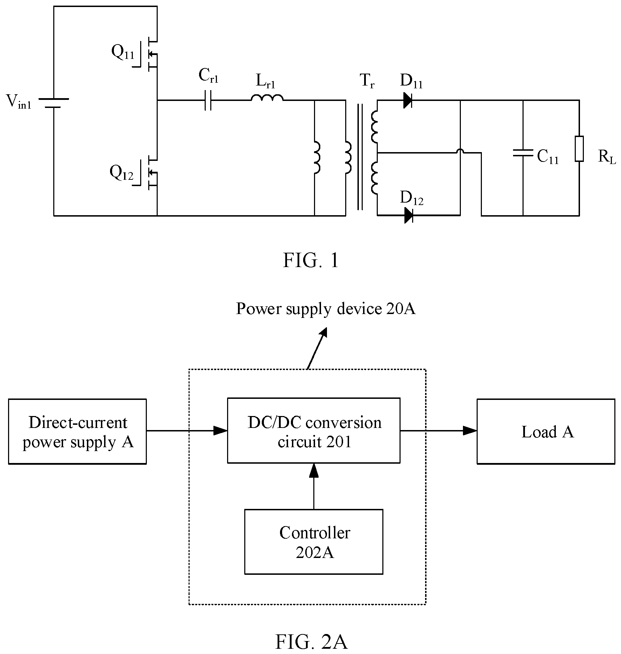

A DC/DC conversion circuit shown in FIG. 1 is used in a conventional technology. Core elements of the DC/DC conversion circuit include a resonant capacitor $C_{r1}$, a resonant inductor $L_{r1}$, and a transformer $T_r$. A switching transistor $Q_{11}$ and a switching transistor $Q_{12}$ are controlled to complementarily turn on, so that a size of an output voltage is mainly subject to a quantity of turns of the transformer $T_r$. However, the transformer $T_r$ causes a power loss problem, which reduces voltage conversion efficiency of the DC/DC conversion circuit.

**SUMMARY**

This application provides a DC/DC conversion circuit, a DC/DC converter, and a power supply device, so that a loss can be reduced and conversion efficiency is high.

According to a first aspect, this application provides a DC/DC conversion circuit. The DC/DC conversion circuit includes a first terminal, a second terminal, and a first resonance unit. The first resonance unit has a first port, a second port, a third port, and a fourth port. During specific implementation, the first port of the first resonance unit is connected to the first terminal of the DC/DC conversion circuit, and the second port of the first resonance unit and the third port of the first resonance unit are connected to the second terminal of the DC/DC conversion circuit; and the fourth port of the first resonance unit is connected to a reference ground of the DC/DC conversion circuit.

The first resonance unit includes a first switch bridge arm, a second switch bridge arm, a first capacitor, and a resonance bridge; and the resonance bridge is connected between a midpoint of the first switch bridge arm and a midpoint of the second switch bridge arm. In this case, an internal structure of the first resonance unit is specifically implemented as follows: One end of the first switch bridge arm of the first resonance unit is connected to the first port of the first resonance unit, and the other end of the first switch bridge arm of the first resonance unit is connected to the second port of the first resonance unit; one end of the second switch bridge arm of the first resonance unit is connected to the third port of the first resonance unit, and the other end of the second switch bridge arm of the first resonance unit is connected to the fourth port of the first resonance unit; and the first capacitor of the first resonance unit is connected between the third port of the first resonance unit and the fourth port of the first resonance unit.

According to embodiments of this application, a new circuit structure is used, which is different from an existing technology in which a transformer is required to implement a specific voltage output. In embodiments of this application, a specific output voltage is obtained by controlling each switch bridge arm in a DC/DC converter to turn on or turn off, without participation of a transformer, so that a loss caused by the transformer can be reduced, and conversion efficiency is high.

With reference to the first aspect, in a first possible implementation, the first switch bridge arm includes a first switch unit and a second switch unit connected in series to the first switch unit; and the second switch bridge arm includes a third switch unit and a fourth switch unit connected in series to the third switch unit. During specific implementation, when the first switch unit and the third switch unit are turned on and the second switch unit and the fourth switch unit are turned off, the first resonance unit is in a first resonance state; and when the first switch unit and the third switch unit are turned off and the second switch unit and the fourth switch unit are turned on, the first resonance unit is in a second resonance state.

With reference to the first possible implementation of the first aspect, in a second possible implementation, a first operating cycle of the DC/DC conversion circuit includes a first time period and a second time period; in the first time period, the first resonance unit is in the first resonance state; and in the second time period, the first resonance unit is in the second resonance state.

When the first terminal of the DC/DC conversion circuit is an input terminal and the second terminal of the DC/DC conversion circuit is an output terminal, a voltage gain of the DC/DC conversion circuit in the first operating cycle is 1/2; or when the first terminal of the DC/DC conversion circuit is an output terminal and the second terminal of the DC/DC conversion circuit is an input terminal, a voltage gain of the DC/DC conversion circuit in the first operating cycle is 2. In embodiments of this application, a voltage of the DC/DC conversion circuit may be either bucked or boosted by interchanging the input terminal and the output terminal of the DC/DC conversion circuit.

With reference to any one of the foregoing possible implementations of the first aspect, in a third possible implementation, duration of the first time period is equal to duration of the second time period.

According to a second aspect, an embodiment of this application provides a DC/DC converter. The DC/DC converter includes a first terminal, a second terminal, and M identical resonance units, and M is greater than or equal to 2. Each of the M resonance units has a first port, a second port, a third port, and a fourth port. During specific implementation, the first port of a first resonance unit in the resonance units is connected to the first terminal of the DC/DC converter, and the second port of each of the resonance units and the third port of an $M^{th}$ resonance unit in the resonance units are connected to the second terminal of the DC/DC converter; the first port of the $M^{th}$ resonance unit is connected to the third port of an $(M-1)^{th}$ resonance unit; and the fourth port of each resonance unit is connected to a reference ground of the DC/DC converter.

Any resonance unit in the M resonance units includes a first switch bridge arm, a second switch bridge arm, a first capacitor, and a resonance bridge; and the resonance bridge in the any resonance unit is connected between a midpoint of the first switch bridge arm of the any resonance unit and a midpoint of the second switch bridge arm of the any resonance unit. In this case, an internal structure of the any resonance unit is specifically implemented as follows: One end of the first switch bridge arm of the any resonance unit is connected to the first port of the any resonance unit, and the other end of the first switch bridge arm of the any resonance unit is connected to the second port of the any resonance unit; one end of the second switch bridge arm of the first resonance unit is connected to the third port of the first resonance unit, and the other end of the second switch bridge arm of the first resonance unit is connected to the fourth port of the first resonance unit; and the first capacitor of the first resonance unit is connected between the third port of the first resonance unit and the fourth port of the first resonance unit.

In this embodiment of this application, different voltage gains of the DC/DC converter can be output by increasing a quantity of resonance units, thereby improving flexibility of use of the DC/DC converter.

With reference to the second aspect, in a first possible implementation, the first switch bridge arm of the any resonance unit includes a first switch unit and a second switch unit connected in series to the first switch unit; and the second switch bridge arm of the any resonance unit includes a third switch unit and a fourth switch unit connected in series to the third switch unit. During specific implementation, when the first switch unit of the any resonance unit and the third switch unit of the any resonance unit are turned on and the second switch unit of the any resonance unit and the fourth switch unit of the any resonance unit are turned off, the any resonance unit is in a first resonance state; and when the first switch unit of the any resonance unit and the third switch unit of the any resonance unit are turned off and the second switch unit of the any resonance unit and the fourth switch unit of the any resonance unit are turned on, the any resonance unit is in a second resonance state.

With reference to the first possible implementation of the second aspect, in a second possible implementation, a first operating cycle of the DC/DC converter includes a first time period and a second time period; in the first time period, each of the M resonance units is in the first resonance state; and in the second time period, each of the M resonance units is in the second resonance state. When the first terminal of the DC/DC converter is an input terminal and the second terminal of the DC/DC converter is an output terminal, a voltage gain of the DC/DC converter in the first operating cycle is $1/(M+1)$; or when the first terminal of the DC/DC converter is an output terminal and the second terminal of the DC/DC converter is an input terminal, a voltage gain of the DC/DC converter in the first operating cycle is $M+1$.

With reference to the first possible implementation of the second aspect, in a third possible implementation, when the first switch unit of the any resonance unit and the second switch unit of the any resonance unit are turned on and the third switch unit of the any resonance unit and the fourth switch unit of the any resonance unit are turned off, the first resonance unit is in a short-circuited state.

With reference to the third possible implementation of the second aspect, in a fourth possible implementation, a second operating cycle of the DC/DC converter includes a third time period and a fourth time period; in the third time period, the first resonance unit and all resonance units disposed between the first resonance unit and a $K^{th}$ resonance unit are in the first resonance state; in the fourth time period, the first resonance unit and all the resonance units disposed between the first resonance unit and the $K^{th}$ resonance unit are in the second resonance state; K is less than or equal to M; and in the second operating cycle of the DC/DC converter, the $K^{th}$ resonance unit and all resonance units disposed between the $K^{th}$ resonance unit and the $M^{th}$ resonance unit are in the short-circuited state.

When the first terminal of the DC/DC converter is an input terminal and the second terminal of the DC/DC converter is an output terminal, a voltage gain of the DC/DC converter in the second operating cycle is $1/K$; or when the first terminal of the DC/DC converter is an output terminal and the second terminal of the DC/DC converter is an input terminal, a voltage gain of the DC/DC converter in the second operating cycle is K.

With reference to the second possible implementation of the second aspect, in a fifth possible implementation, duration of the first time period is equal to duration of the second time period.

According to a third aspect, an embodiment of this application provides a power supply device. The power supply device includes a controller and the DC/DC conversion circuit according to any one of the first aspect or the possible implementations of the first aspect. The controller is connected to each switch bridge arm in the DC/DC conversion circuit, and the controller may control turn-on or turn-off of each switch bridge arm, so as to control a voltage gain of the DC/DC conversion circuit.

According to a fourth aspect, an embodiment of this application provides a power supply device. The power supply device includes a controller and the DC/DC converter according to any one of the second aspect or the possible implementations of the second aspect. The controller is connected to each switch bridge arm in the DC/DC converter, and the controller may control turn-on or turn-off of each switch bridge arm, so as to control a voltage gain of the DC/DC converter.

It should be understood that, for implementation and beneficial effects of the foregoing plurality of aspects of this application, mutual reference may be made to the aspects.

BRIEF DESCRIPTION OF DRAWINGS

FIG. 1 shows a DC/DC conversion circuit in an existing technology;
FIG. 2A is a block diagram of a structure of a power supply device according to an embodiment of this application;
FIG. 2B is a block diagram of another structure of a power supply device according to an embodiment of this application;
FIG. 3 is a circuit diagram of a DC/DC conversion circuit according to an embodiment of this application;
FIG. 4 is a diagram of a control signal used to control a DC/DC conversion circuit according to an embodiment of this application;
FIG. 5A is a schematic diagram of a waveform of an input voltage of a DC/DC conversion circuit according to an embodiment of this application;
FIG. 5B is a schematic diagram of a waveform of an output voltage of a DC/DC conversion circuit according to an embodiment of this application;
FIG. 6 is another circuit diagram of a DC/DC conversion circuit according to an embodiment of this application;
FIG. 7 is a circuit diagram of a DC/DC converter according to an embodiment of this application;
FIG. 8A and FIG. 8B are equivalent circuit diagrams of a DC/DC converter according to an embodiment of this application;
FIG. 9A is a schematic diagram of a waveform of another input voltage of a DC/DC converter according to an embodiment of this application;
FIG. 9B is a schematic diagram of a waveform of another output voltage of a DC/DC converter according to an embodiment of this application;
FIG. 10 is another circuit diagram of a DC/DC converter according to an embodiment of this application;
FIG. 11 is a diagram of another control signal used to control a DC/DC converter according to an embodiment of this application;
FIG. 12A and FIG. 12B are other equivalent circuit diagrams of a DC/DC converter according to an embodiment of this application;
FIG. 13A and FIG. 13B are other equivalent circuit diagrams of a DC/DC converter according to an embodiment of this application;
FIG. 14 is another circuit diagram of a DC/DC converter according to an embodiment of this application; and
FIG. 15 is another circuit diagram of a DC/DC converter according to an embodiment of this application.

DESCRIPTION OF EMBODIMENTS

The following clearly and completely describes technical solutions in embodiments of this application with reference to accompanying drawings in embodiments of this application. Clearly, described embodiments are merely some rather than all of embodiments of this application. All other embodiments obtained by a person of ordinary skill in the art based on embodiments of this application without creative efforts shall fall within the protection scope of this application.

FIG. 2A is a block diagram of a structure of a power supply device according to an embodiment of this application. As shown in FIG. 2A, a power supply device 20A is disposed between a direct-current power supply A and a load A, and the power supply device 20A includes a DC/DC conversion circuit 201 and a controller 202A. The DC/DC conversion circuit 201 is connected to the controller 202A.

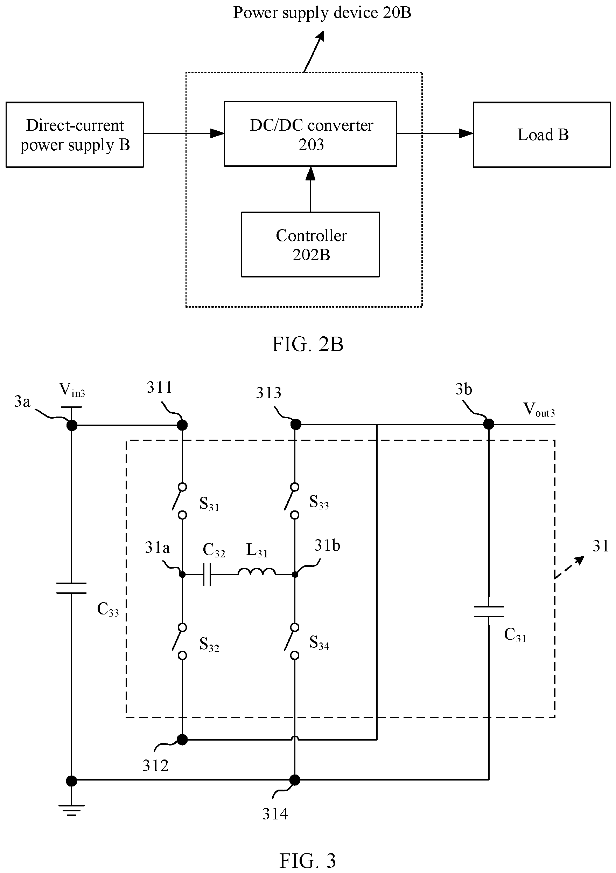

FIG. 2B is a block diagram of another structure of a power supply device according to an embodiment of this application. As shown in FIG. 2B, a power supply device 20B is disposed between a direct-current power supply B and a load B, and the power supply device 20B includes a DC/DC converter 203 and a controller 202B. The DC/DC converter 203 is connected to the controller 202B.

It should be explained that a difference between the power supply device 20A shown in FIG. 2A and the power supply device 20B shown in FIG. 2B lies in that the DC/DC conversion circuit 201 is different from the DC/DC converter 203. During specific implementation, the DC/DC conversion circuit 201 includes one resonance unit, while the DC/DC converter 203 may include at least two resonance units.

The direct-current power supply A and the direct-current power supply B each may be, for example, an energy storage battery (for example, a nickel-cadmium battery, a nickel-hydrogen battery, a lithium-ion battery, or a lithium-polymer battery), a solar cell, an AC/DC converter (Alternating Current/Direct-Current converter), or another DC/DC converter (for example, a buck converter, a boost converter, or a buck-boost converter). It should be noted that the direct-current power supply A and the direct-current power supply B may be the same or different. This application sets no limitation on a type of a direct-current power supply connected to each of the DC/DC conversion circuit 201 and the DC/DC converter 203.

The load A and the load B each may be, for example, a server chip, an artificial intelligence chip, an image processor, a mobile phone terminal, a photovoltaic inverter, an electric vehicle, another DC/DC converter, and/or a DC/AC converter (Direct-Current converter/Alternating Current). The DC/DC conversion circuit 201 may convert a voltage of the direct-current power supply A into a voltage required by the load A. The DC/DC converter 203 may convert a voltage of the direct-current power supply B into a voltage required by the load B. It should be noted that the load A and the load B may be the same or different.

It may be understood that the direct-current power supply and the load are examples rather than exhaustive enumerations of a use scenario of the power supply device in this application. It should be understood that the power supply device provided in this application may be used in any scenario in which a direct-current voltage needs to be converted, that is, may be used in a scenario in which power is supplied to any direct-current load.

The controller 202A and the controller 202B each may be, for example, a micro control unit (Micro Control Unit, MCU), a central processing unit (central processing unit, CPU), another general-purpose processor, a digital signal processor (digital signal processor, DSP), an application-specific integrated circuit (application specific integrated circuit, ASIC), a field-programmable gate array (field-programmable gate array, FPGA) or another programmable logic device, a discrete gate or a transistor logic device, or a discrete hardware component. The controller 202A and the controller 202B may be the same or different.

The DC/DC conversion circuit 201 includes a first terminal, a second terminal, and a resonance unit. The resonance unit includes a resonance bridge (for example, an inductor and a capacitor) and a plurality of switch bridge arms. The controller 202A may control each switch bridge arm in the DC/DC conversion circuit 201 to turn on or turn off, so that a current change and a voltage change are generated on the inductor and the capacitor, that is, the inductor and the capacitor generate resonance, thereby implementing a specific direct-current voltage output. A voltage of the DC/DC conversion circuit 201 provided in this embodiment of this application may be either bucked or boosted. For example, if the first terminal of the DC/DC conversion circuit 201 is an input terminal and the second terminal of the DC/DC conversion circuit 201 is an output terminal, the first terminal of the DC/DC conversion circuit 201 is connected to a direct-current power supply, and the second terminal of the DC/DC conversion circuit 201 is connected to a load. In this case, the DC/DC conversion circuit 201 is a buck conversion circuit. For another example, if the first terminal of the DC/DC conversion circuit 201 is an output terminal and the second terminal of the DC/DC conversion circuit 201 is an input terminal, the first terminal of the DC/DC conversion circuit 201 is connected to a load, and the second terminal of the DC/DC conversion circuit 201 is connected to a direct-current power supply. In this case, the DC/DC conversion circuit 201 is a boost conversion circuit.

Similarly, the DC/DC converter 203 may include a first terminal, a second terminal, and at least two resonance units. In this case, in addition to bucking or boosting a voltage, the DC/DC converter 203 may further control a switch bridge arm in each resonance unit to be in a different state, so that the DC/DC converter 203 has different voltage gains in a same circuit structure and outputs different voltage values.

It should be explained that the switch bridge arm in the resonance unit may include a plurality of switch units. The switch unit may be specifically implemented as an insulated gate bipolar transistor (Insulated Gate Bipolar Transistor, IGBT) and an anti-parallel diode thereof, a metal-oxide semiconductor field-effect transistor (Metal-Oxide-Semiconductor Field-Effect Transistor, MOSFET), or the like. In addition, the switch unit may include a plurality of switches connected in series or in parallel. In general, a type and a quantity of switches in a switch unit are not limited in this embodiment of this application.

The following describes a specific structure of a DC/DC conversion circuit with reference to FIG. 3 to FIG. 6.

FIG. 3 is a circuit diagram of a DC/DC conversion circuit according to an embodiment of this application. As shown in FIG. 3, the DC/DC conversion circuit provided in this embodiment of this application includes a first terminal 3a, a second terminal 3b, and a first resonance unit 31.

The first resonance unit 31 has a first port 311, a second port 312, a third port 313, and a fourth port 314. The first port 311 of the first resonance unit 31 is connected to the first terminal 3a of the DC/DC conversion circuit; the second port 312 of the first resonance unit 31 and the third port 313 of the first resonance unit 31 are connected to the second terminal 3b of the DC/DC conversion circuit; and the fourth port 314 of the first resonance unit 31 is connected to a reference ground of the DC/DC conversion circuit.

In addition, the first resonance unit 31 includes a first switch bridge arm, a second switch bridge arm, a first capacitor, and a resonance bridge. The resonance bridge is connected between a midpoint of the first switch bridge arm and a midpoint of the second switch bridge arm.

During specific implementation, the first switch bridge arm includes a first switch unit (for example, a first switch $S_{31}$) and a second switch unit (for example, a second switch $S_{32}$) connected in series to the first switch unit; and the second switch bridge arm includes a third switch unit (for example, a third switch $S_{33}$) and a fourth switch unit (for example, a fourth switch $S_{34}$) connected in series to the third switch unit. It should be explained that this application uses an example in which one switch unit includes one switch. In specific practice, for the switch unit, a plurality of switches may be selected based on a voltage and a current in the DC/DC conversion circuit, for series or parallel connection. In other words, a quantity of switches in a switch unit is not limited in this embodiment of this application.

The resonance bridge includes a first inductor $L_{31}$ and a second capacitor $C_{32}$. It should be explained that the resonance bridge may include a plurality of inductors and a plurality of capacitors. In this embodiment of this application, that the resonance bridge includes one inductor and one capacitor is used as an example, and a quantity of inductors and a quantity of capacitors in the resonance bridge are not limited.

In this case, in the first resonance unit 31, one end of the first switch $S_{31}$ is connected to the first port 311 of the first resonance unit 31, the other end of the first switch $S_{31}$ and one end of the second switch $S_{32}$ are connected to a first junction 31a (that is, the midpoint of the first switch bridge arm), the other end of the second switch $S_{32}$ is connected to the second port 312 of the first resonance unit 31, one end of the third switch $S_{33}$ is connected to the third port 313 of the first resonance unit 31, one end of the third switch $S_{33}$ is connected to the third port 313 of the first resonance unit 31, the other end of the third switch $S_{33}$ and a first end of the fourth switch $S_{34}$ are connected to a second junction 31b (that is, the midpoint of the second switch bridge arm), and the other end of the fourth switch $S_{34}$ is coupled to the fourth port 314 of the first resonance unit 31.

The first inductor $L_{31}$ and the second capacitor $C_{32}$ are connected in series between the first junction 31a and the second junction 31b. The first capacitor $C_{31}$ is connected between the third port 313 of the first resonance unit 31 and the fourth port 314 of the first resonance unit 31.

It may be understood that when the first terminal 3a of the DC/DC conversion circuit is an input terminal and the second terminal 3b of the DC/DC conversion circuit is an output terminal, the first capacitor $C_{31}$ performs rectification and filtering on an output voltage of the first resonance unit 31, so that the DC/DC conversion circuit outputs a direct current; or when the first terminal 3a of the DC/DC conversion circuit is an output terminal and the second terminal 3b of the DC/DC conversion circuit is an input terminal, the first capacitor $C_{31}$ filters out ripple interference in an input voltage of the DC/DC conversion circuit.

Optionally, the DC/DC conversion circuit provided in this embodiment of this application may further include a third capacitor $C_{33}$. One end of the third capacitor $C_{33}$ is connected to the first terminal 3a of the DC/DC conversion circuit, and the other end of the third capacitor $C_{33}$ is connected to a reference ground. The third capacitor $C_{33}$ is a filter capacitor. When the first terminal 3a of the DC/DC conversion circuit is an input terminal, the third capacitor $C_{33}$ filters out ripple interference in an input voltage of the DC/DC conversion circuit. When the first terminal 3a of the DC/DC conversion circuit is an output terminal, the third capacitor $C_{33}$ performs rectification and filtering on an output voltage of the first resonance unit 31, so that the DC/DC conversion circuit outputs a direct current.

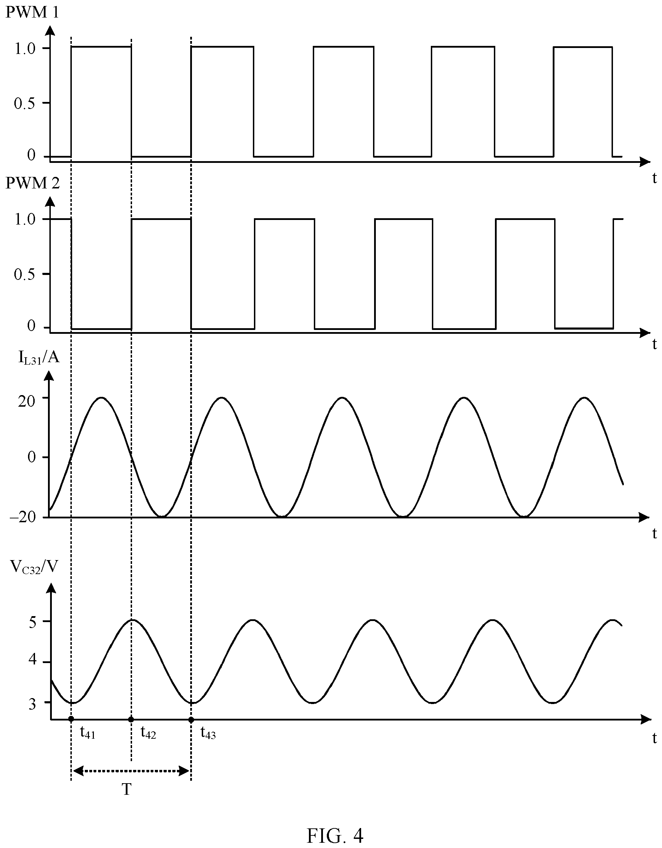

In some feasible implementations, a control signal shown in FIG. 4 may be used to control the first resonance unit 31 shown in FIG. 3. During specific implementation, a controller sends a control signal PWM 1 shown in FIG. 4 to the first switch $S_{31}$ and the third switch $S_{33}$, and sends a control signal PWM 2 shown in FIG. 4 to the second switch $S_{32}$ and the fourth switch $S_{34}$. The control signal PWM 1 is complementary to the control signal PWM 2.

Optionally, a duty cycle of each of the control signal PWM 1 and the control signal PWM 2 is 50%. In other words, duration of a time period from $t_{41}$ to $t_{42}$ is equal to duration of a time period from $t_{42}$ to $t_{43}$.

For example, in the time period from $t_{41}$ to $t_{42}$, the control signal PWM 1 controls the first switch $S_{31}$ and the third switch $S_{33}$ to turn on, and the control signal PWM 2 controls the second switch $S_{32}$ and the fourth switch $S_{34}$ to turn off. In this case, the first resonance unit 31 is in a first resonance state. In this case, the first inductor $L_{31}$ and the second capacitor $C_{32}$ are in a charging state, a voltage $V_{C32}$ of the second capacitor $C_{32}$ increases, and a current $I_{L31}$ of the first inductor $L_{31}$ first increases and then decreases.

In the time period from $t_{42}$ to $t_{43}$, the control signal PWM 1 controls the first switch $S_{31}$ and the third switch $S_{33}$ to turn off, and the control signal PWM 2 controls the second switch $S_{32}$ and the fourth switch $S_{34}$ to turn on. In this case, the first resonance unit 31 is in a second resonance state. In this case, the first inductor $L_{31}$ and the second capacitor $C_{32}$ are in a discharging state, a voltage $V_{C32}$ of the second capacitor $C_{32}$ decreases, and a current $I_{L31}$ of the first inductor $L_{31}$ first increases and then decreases.

It may be understood that the time period from $t_{41}$ to $t_{42}$ and the time period from $t_{42}$ to $t_{43}$ are one operating

cycle T of the first resonance unit 31. Optionally, T may be related to the first inductor $L_{31}$ and the second capacitor $C_{32}$, and is represented by using a formula as follows:

$$T = 2\pi\sqrt{L \times C} \qquad \text{formula 1}$$

L is an inductance of the first inductor $L_{31}$, and C is a capacitance of the second capacitor $C_{32}$.

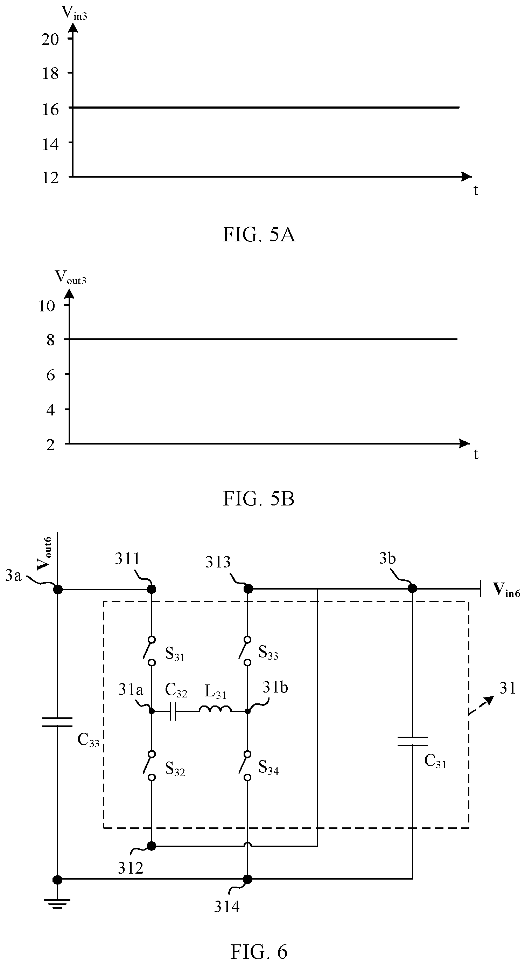

In FIG. 3, for example, the first terminal 3a of the DC/DC conversion circuit is connected to a power supply $V_{in3}$, and the second terminal 3b of the DC/DC conversion circuit is connected to an output terminal $V_{out3}$, in other words, the first terminal 3a of the DC/DC conversion circuit is an input terminal and the second terminal 3b of the DC/DC conversion circuit is an output terminal. In this case, for the input voltage and the output voltage of the DC/DC conversion circuit in FIG. 3, refer to FIG. 5A and FIG. 5B, respectively. As shown in FIG. 5A, for example, an input voltage provided by the power supply $V_{in3}$ is 16 V. Under control of the control signal shown in FIG. 4, in the DC/DC conversion circuit in FIG. 3, an output voltage waveform obtained at the output terminal $V_{out3}$ is shown in FIG. 5B, that is, a voltage at the output terminal $V_{out3}$ of the DC/DC conversion circuit is 8 V In other words, the DC/DC conversion circuit provided in this embodiment of this application can implement a voltage gain of 1/2.

In the following, how the DC/DC conversion circuit shown in FIG. 3 implements the voltage gain of 1/2 is further understood from an energy conservation perspective.

During specific implementation, when the first resonance unit 31 is in the first resonance state, a voltage between the first port 311 and the third port 313 of the first resonance unit 31 is $V_{in3}$ - $V_{out3}$. When the first resonance unit 31 is in the second resonance state, a voltage between the second port 312 and the fourth port 314 of the first resonance unit 31 is $V_{out3}$. Energy obtained by the first inductor $L_{31}$ and the second capacitor $C_{32}$ during charging is equal to energy provided by the first inductor $L_{31}$ and the second capacitor $C_{32}$ during discharging. In this case, the following formula exists:

$$(V_{in3} - V_{out3}) \times I_1 = V_{out3} \times I_1 \qquad \text{formula 2}$$

$I_1$ is a current that flows through the first inductor $L_{31}$ and the second capacitor $C_{32}$.

The following can be learned according to formula 2: $V_{in3} = 2V_{out3}$. To be specific, the voltage gain of the DC/DC conversion circuit shown in FIG. 3 is 1/2.

According to this embodiment of this application, a new circuit structure is used, which is different from an existing technology in which a transformer is required to implement a specific voltage output. In this embodiment of this application, a specific output voltage is obtained by controlling each switch bridge arm in the DC/DC conversion circuit to turn on or turn off, without participation of a transformer, so that a loss caused by the transformer can be avoided, and conversion efficiency is high.

Optionally, in some feasible implementations, the input terminal and the output terminal of the DC/DC conversion circuit shown in FIG. 3 may be interchanged to obtain a DC/DC conversion circuit shown in FIG. 6. Different from the DC/DC conversion circuit shown in FIG. 3, the first terminal 3a of the DC/DC conversion circuit shown in FIG. 6 is an output terminal, that is, the first terminal 3a of the DC/DC conversion circuit is connected to an output terminal $V_{out6}$; and the second terminal 3b of the DC/DC conversion circuit is an input terminal, that is, the second terminal 3b of the DC/DC conversion circuit is connected to a power supply $V_{in6}$. In this case, the control signal PWM 1 shown in FIG. 4 can still control turn-on or turn-off of the first switch $S_{31}$ and the third switch $S_{33}$, and the control signal PWM 2 shown in FIG. 4 can still control turn-on or turn-off of the second switch $S_{32}$ and the fourth switch $S_{34}$. Unlike the DC/DC conversion circuit shown in FIG. 3, which is a buck conversion circuit and implements the voltage gain of 1/2, the DC/DC conversion circuit shown in FIG. 6 is a boost conversion circuit and implements a voltage gain of 2.

How the DC/DC conversion circuit shown in FIG. 6 implements the voltage gain of 2 is understood from an energy conservation perspective.

During specific implementation, when the first resonance unit 31 is in the first resonance state, a voltage between the first port 311 and the third port 313 of the first resonance unit 31 is $V_{in6}$ - $V_{out6}$. When the first resonance unit 31 is in the second resonance state, a voltage between the second port 312 and the fourth port 314 of the first resonance unit 31 is $V_{in6}$. Energy obtained by the first inductor $L_{31}$ and the second capacitor $C_{32}$ during charging is equal to energy provided by the first inductor $L_{31}$ and the second capacitor $C_{32}$ during discharging. In this case, the following formula exists:

$$(V_{in6} - V_{out6}) \times I_2 = V_{in6} \times I_2 \qquad \text{formula 3}$$

$I_2$ is a current that flows through the first inductor $L_{31}$ and the second capacitor $C_{32}$.

The following can be learned according to formula 3: $2V_{in6} = V_{out6}$. To be specific, the voltage gain of the DC/DC conversion circuit shown in FIG. 6 is 2.

In this embodiment of this application, different voltage gains can be implemented by changing the input terminal and the output terminal of the DC/DC conversion circuit, without changing a specific connection relationship between internal components of the DC/DC conversion circuit. In other words, in specific product application, the first terminal of the DC/DC conversion circuit may be connected to not only a power supply but also a load, so as to implement not only voltage bucking but also voltage boosting. By implementing this embodiment of this application, efficiency and flexibility of voltage gain switching of the DC/DC conversion circuit can be improved.

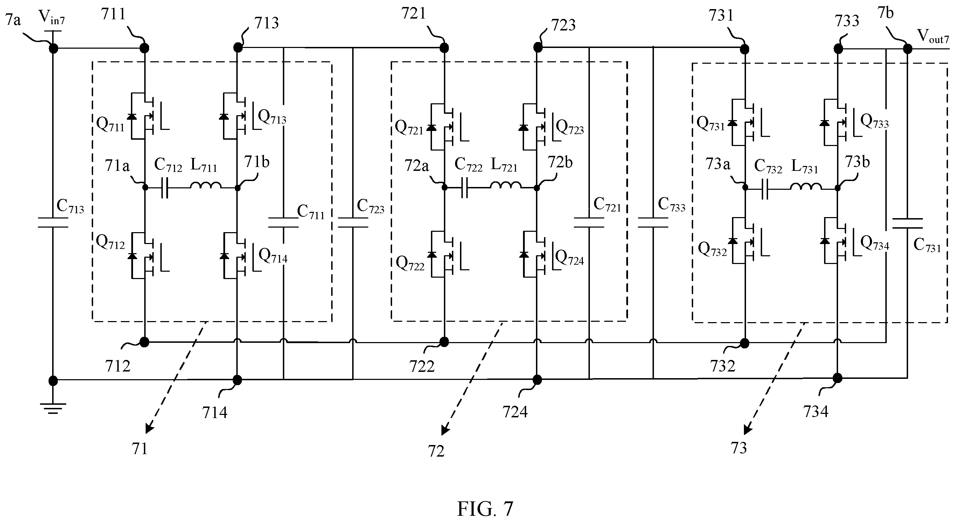

With reference to FIG. 3 to FIG. 6, the foregoing provides the description by using an example in which the DC/DC conversion circuit includes one resonance unit. With reference to FIG. 7 to FIG. 15, the following describes a DC/DC converter that may include M identical resonance units, where M is greater than or equal to 2.

FIG. 7 is a circuit diagram of a DC/DC converter according to an embodiment of this application. As shown in FIG. 7, for example, the DC/DC converter includes three resonance units. To be specific, the DC/DC converter in this embodiment of this application includes a first resonance unit 71, a second resonance unit 72, and a third resonance unit 73.

A first port 711 of the first resonance unit 71 is connected to a first terminal 7a of the DC/DC converter, a third port 713 of the first resonance unit 71 is connected to a first port 721 of the second resonance unit 72, a third port 723 of the second resonance unit 72 is connected to a first port 731 of the third resonance unit 73, and a third port 733 of the third resonance unit 73 is connected to a second terminal 7b of the DC/DC converter. In addition, a second port 712 of the first resonance unit 71, a second port 722 of the second resonance unit 72, and a second port 732 of the third resonance unit 73 are connected to the second terminal 7b of the DC/DC converter, and a fourth port 714 of the first resonance unit 71, a fourth port 724 of the second resonance unit 72, and a fourth port 734 of the third resonance unit 73 are connected to a reference ground of the DC/DC converter.

The first resonance unit 71, the second resonance unit 72, and the third resonance unit 73 have a same internal structure, and may be understood as identical resonance units. Each resonance unit includes a first switch bridge arm, a second switch bridge arm, a first capacitor, and a resonance bridge. In addition, the resonance bridge is connected between a midpoint of the first switch bridge arm and a midpoint of the second switch bridge arm.

For example, each switch bridge arm in each resonance unit is specifically implemented as a MOSFET. In the first resonance unit 71, one end (that is, a drain) of a first switch $Q_{711}$ is connected to the first port 711 of the first resonance unit 71, the other end (that is, a source) of the first switch $Q_{711}$ and one end (that is, a drain) of a second switch $Q_{712}$ are connected to a first junction 71a (that is, the midpoint of the first switch bridge arm of the first resonance unit 71), one end (that is, a drain) of a third switch $Q_{713}$ is connected to the third port 713 of the first resonance unit 71, and the other end (that is, a source) of the third switch $Q_{713}$ and one end (that is, a drain) of a fourth switch $Q_{714}$ are connected to a second junction 71b (that is, the midpoint of the second switch bridge arm of the first resonance unit 71). The other end (that is, a source) of the second switch $Q_{712}$ is connected to the second port 712 of the first resonance unit 71, and the other end (that is, a source) of the fourth switch $Q_{714}$ is connected to the fourth port 714 of the first resonance unit 71.

A first inductor $L_{711}$ and a second capacitor $C_{712}$ are connected in series between the first junction 71a and the second junction 71b. The second capacitor $C_{712}$ is connected between the third port 713 and the fourth port 714 of the first resonance unit 71.

In the second resonance unit 72, one end (that is, a drain) of a first switch $Q_{721}$ is connected to the first port 721 of the second resonance unit 72, the other end (that is, a source) of the first switch $Q_{721}$ and one end (that is, a drain) of a second switch $Q_{722}$ are connected to a first junction 72a (that is, the midpoint of the first switch bridge arm of the second resonance unit 72), a first end (that is, a drain) of a third switch $Q_{723}$ is connected to the third port 723 of the second resonance unit 72, and the other end (that is, a source) of the third switch $Q_{723}$ and one end (that is, a drain) of a fourth switch $Q_{724}$ are connected to a second junction 72b (that is, the midpoint of the second switch bridge arm of the second resonance unit 72). The other end (that is, a source) of the second switch $Q_{722}$ is connected to the second port 722 of the second resonance unit 72, and the other end (that is, a source) of the fourth switch $Q_{724}$ is connected to the fourth port 724 of the second resonance unit 72.

A first inductor $L_{721}$ and a second capacitor $C_{722}$ are connected in series between the first junction 72a and the second junction 72b. The second capacitor $C_{722}$ is connected between the third port 723 and the fourth port 724 of the second resonance unit 72.

In the third resonance unit 73, one end (that is, a drain) of a first switch $Q_{731}$ is connected to the first port 731 of the third resonance unit 73, the other end (that is, a source) of the first switch $Q_{731}$ and one end (that is, a drain) of a second switch $Q_{732}$ are connected to a first junction 73a (that is, the midpoint of the first switch bridge arm of the third resonance unit 73), one end (that is, a drain) of a third switch $Q_{733}$ is connected to the third port 733 of the third resonance unit 73, and the other end (that is, a source) of the third switch $Q_{733}$ and one end (that is, a drain) of a fourth switch $Q_{734}$ are connected to a second junction 73b (that is, the midpoint of the second switch bridge arm of the third resonance unit 73). The other end (that is, a source) of the second switch $Q_{732}$ is connected to the second port 732 of the third resonance unit 73, and the other end (that is, a source) of the fourth switch $Q_{734}$ is connected to the fourth port 734 of the third resonance unit 73.

A first inductor $L_{731}$ and a second capacitor $C_{732}$ are connected in series between the first junction 73a and the second junction 73b. The second capacitor $C_{732}$ is connected between the third port 733 and the fourth port 734 of the third resonance unit 73.

In some feasible implementations, the control signal shown in FIG. 4 may be used to control the first resonance unit 71, the second resonance unit 72, and the third resonance unit 73 shown in FIG. 7. During specific implementation, a controller sends the control signal PWM 1 shown in FIG. 4 to each of the first switch $Q_{711}$ and the third switch $Q_{713}$ of the first resonance unit 71, the first switch $Q_{721}$ and the third switch $Q_{723}$ of the second resonance unit 72, and the first switch $Q_{731}$ and the third switch $Q_{733}$ of the third resonance unit 73. In addition, the controller further sends the control signal PWM 2 shown in FIG. 4 to the second switch $Q_{712}$ and the fourth switch $Q_{714}$ of the first resonance unit 71, the second switch $Q_{722}$ and the fourth switch $Q_{724}$ of the second resonance unit 72, and the second switch $Q_{732}$ and the fourth switch $Q_{734}$ of the third resonance unit 73.

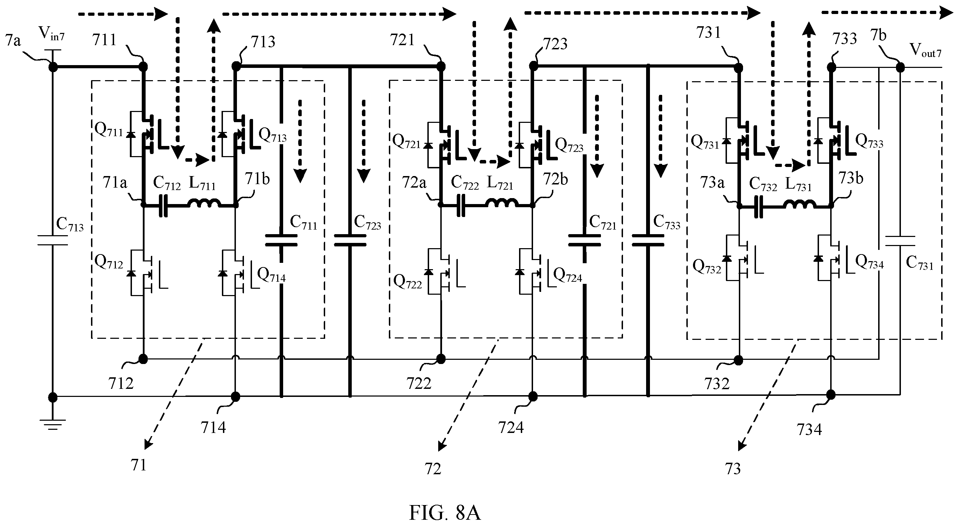

In this case, in the time period from $t_{41}$ to $t_{42}$, the first switch and the third switch of each resonance unit are turned on, the second switch and the fourth switch of each resonance unit are turned off, and each resonance unit is in the first resonance state. To be specific, all of the first switch $Q_{711}$ and the third switch $Q_{713}$ of the first resonance unit 71, the first switch $Q_{721}$ and the third switch $Q_{723}$ of the second resonance unit 72, and the first switch $Q_{731}$ and the third switch $Q_{733}$ of the third resonance unit 73 are turned on, and the second switch $Q_{712}$ and the fourth switch $Q_{714}$ of the first resonance unit 71, the second switch $Q_{722}$ and the fourth switch $Q_{724}$ of the second resonance unit 72, and the second switch $Q_{732}$ and the fourth switch $Q_{734}$ of the third resonance unit 73 are turned off. In this case, for an equivalent circuit diagram of the DC/DC converter, refer to FIG. 8A. As shown in FIG. 8A, an output current of a power supply $V_{in7}$ sequentially passes through the first switch $Q_{711}$, the second capacitor $C_{712}$, the first inductor $L_{711}$, the third switch $Q_{713}$, the first switch $Q_{721}$, the second capacitor $C_{722}$, the first inductor $L_{721}$, the third switch $Q_{723}$, the first switch $Q_{731}$, the second capacitor $C_{732}$, the first inductor $L_{731}$, and the third switch $Q_{733}$, and reaches an output terminal $V_{out7}$. In general, the power supply $V_{in7}$ charges the first inductor and the second capacitor of each resonance unit in a serial connection manner.

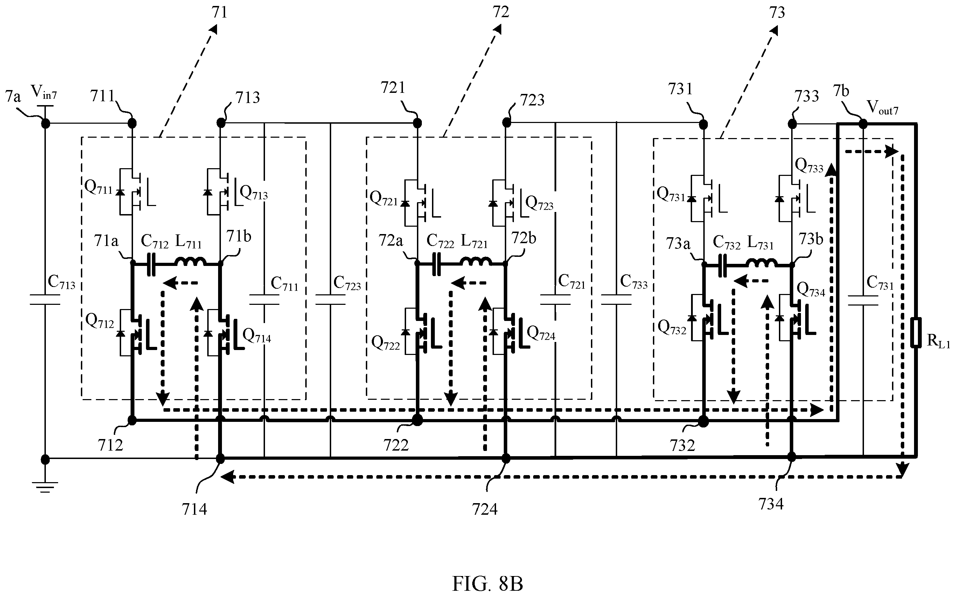

In the time period from $t_{42}$ to $t_{43}$, the first switch and the third switch of each resonance unit are turned off, the second switch and the fourth switch of each resonance unit are turned on, and each resonance unit is in the second resonance state. To be specific, all of the first switch $Q_{711}$ and the third switch $Q_{713}$ of the first resonance unit 71, the first switch $Q_{721}$ and the third switch $Q_{723}$ of the second resonance unit 72, and the first switch $Q_{731}$ and the third switch $Q_{733}$ of the third resonance unit 73 are turned off, and the second switch $Q_{712}$ and the fourth switch $Q_{714}$ of the first resonance unit 71, the second switch $Q_{722}$ and the fourth switch $Q_{724}$ of the second resonance unit 72, and the second switch $Q_{732}$ and the fourth switch $Q_{734}$ of the third resonance unit 73 are turned on. In this case, for an equivalent circuit diagram of the DC/DC converter, refer to FIG. 8B. As shown in FIG. 8B, the first inductor and the second capacitor of each resonance unit form a parallel discharge loop by using a load $R_{L1}$ connected to the output terminal $V_{out7}$.

It should be explained that in an ideal case, the controller simultaneously sends the control signal PWM 1 to all switches of each resonance unit. However, because an operation speed of the controller is not fast enough or device reaction speeds of the switches are different, a phase difference exists between the resonance units. For example, when the first switch $Q_{711}$ and the third switch $Q_{713}$ of the first resonance unit 71 are turned on, but the first switch $Q_{721}$ and the third switch $Q_{723}$ of the second resonance unit 72 have not been turned on yet, the first capacitor $C_{711}$ of the first resonance unit 71 may store energy of the first resonance unit 71 in this case. In other words, the first capacitor $C_{711}$ of the first resonance unit 71 may be used to balance an energy difference between the first resonance unit 71 and the second resonance unit 72.

Likewise, when the first switch $Q_{721}$ and the third switch $Q_{723}$ of the second resonance unit 72 are turned on, but the first switch $Q_{731}$ and the third switch $Q_{733}$ of the third resonance unit 73 have not been turned on yet, the first capacitor $C_{721}$ of the second resonance unit 72 may store energy of the second resonance unit 72 in this case. In other words, the first capacitor $C_{721}$ of the second resonance unit 72 may be used to balance an energy difference between the second resonance unit 72 and the third resonance unit 73.

Optionally, each resonance unit may further include a third capacitor. For example, the first resonance unit 71 includes a third capacitor $C_{713}$, the second resonance unit 72 includes a third capacitor $C_{723}$, and the third resonance unit 73 includes a third capacitor $C_{733}$. In this case, the first capacitor $C_{711}$ and the third capacitor $C_{723}$ are jointly used to balance the energy difference between the first resonance unit 71 and the second resonance unit 72, and the first capacitor $C_{721}$ and the third capacitor $C_{733}$ are jointly used to balance the energy difference between the second resonance unit 72 and the third resonance unit 73.

Optionally, the first capacitor $C_{711}$ of the first resonance unit 71 and the third capacitor $C_{723}$ of the second resonance unit 72 may be combined into one capacitor, and the first capacitor $C_{721}$ of the second resonance unit 72 and the third capacitor $C_{733}$ of the third resonance unit 73 may also be combined into one capacitor.

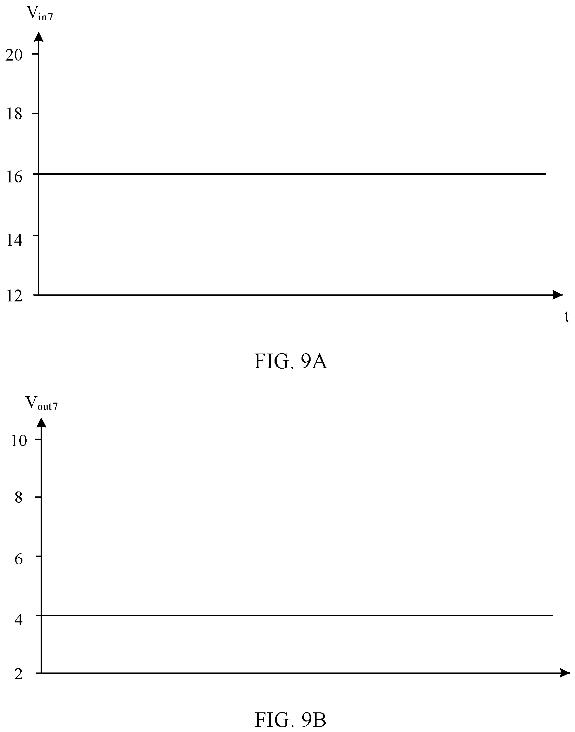

In FIG. 7, for example, the first terminal 7a of the DC/DC converter is connected to the power supply $V_{in7}$, and

the second terminal 7b of the DC/DC converter is connected to the output terminal $V_{out7}$, in other words, the first terminal 7a of the DC/DC converter is an input terminal and the second terminal 7b of the DC/DC converter is an output terminal. In this case, for an input voltage and an output voltage of the DC/DC converter in FIG. 7, refer to FIG. 9A and FIG. 9B, respectively. As shown in FIG. 9A, for example, an input voltage provided by the power supply $V_{in7}$ is 16 V. Under control of the control signal shown in FIG. 4, in the DC/DC converter in FIG. 7, an output voltage waveform obtained at the output terminal $V_{out7}$ is shown in FIG. 9B, that is, a voltage at the output terminal $V_{out7}$ of the DC/DC converter is 4 V. In other words, the DC/DC converter provided in this embodiment of this application can implement a voltage gain of 1/4.

In the following, how the DC/DC converter shown in FIG. 7 implements the voltage gain of 1/4 is further understood from an energy conservation perspective.

During specific implementation, when each resonance unit is in the first resonance state, a voltage between the first port 711 of the first resonance unit 71 and the third port 733 of the third resonance unit 73 is $V_{in7}$ - $V_{out7}$. When each resonance unit is in the second resonance state, a voltage between the second port and the fourth port of each resonance unit is $V_{out7}$. Energy obtained by the first inductor and the second capacitor of each resonance unit during charging is equal to energy provided by the first inductor and the second capacitor of each resonance unit during discharging. In this case, the following formula exists:

$$(V_{in7} - V_{out7}) \times I_3 \ = \ V_{out7} \times 3I_3 \qquad \text{formula 4}$$

$I_3$ is a current that flows through the first inductor and the second capacitor of each resonance unit.

The following can be learned according to formula 4: $V_{in7} = 4V_{out7}$. To be specific, the voltage gain of the DC/DC converter shown in FIG. 7 is 1/4.

In this embodiment of this application, different voltage gains of the DC/DC converter can be output by increasing a quantity of resonance units, thereby improving flexibility of use of the DC/DC converter.

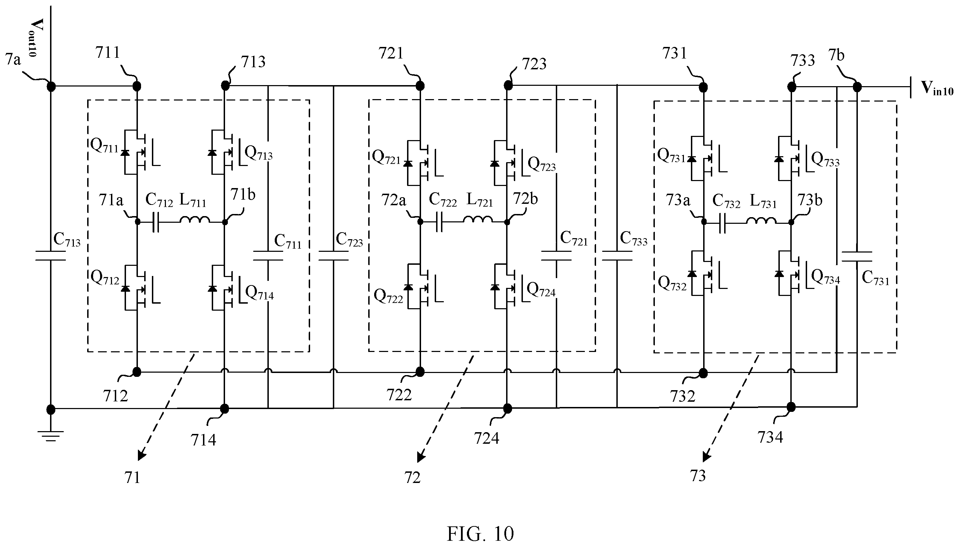

Optionally, in some feasible implementations, the input terminal and the output terminal of the DC/DC converter shown in FIG. 7 may be interchanged to obtain a DC/DC converter shown in FIG. 10. Different from the DC/DC converter shown in FIG. 7, the first terminal 7a of the DC/DC converter shown in FIG. 10 is an output terminal, that is, the first terminal 7a of the DC/DC converter is connected to an output terminal $V_{out10}$; and the second terminal 7b of the DC/DC converter is an input terminal, that is, the second terminal 7b of the DC/DC converter is connected to a power supply $V_{in10}$. In this case, the control signal PWM 1 shown in FIG. 4 can still control the first switch $Q_{711}$ and the second switch $Q_{712}$ of the first resonance unit 71, the first switch $Q_{721}$ and the second switch $Q_{722}$ of the second resonance unit 72, and the first switch $Q_{731}$ and the second switch $Q_{732}$ of the third resonance unit 73; and the control signal PWM 2 can still control the third switch $Q_{713}$ and the fourth switch $Q_{714}$ of the first resonance unit 71, the third switch $Q_{723}$ and the fourth switch $Q_{724}$ of the second resonance unit 72, and the third switch $Q_{733}$ and the fourth switch $Q_{734}$ of the third resonance unit 73. Unlike the DC/DC converter shown in FIG. 7, which is a buck converter and implements the voltage gain of 1/4, the DC/DC converter shown in FIG. 10 is a boost converter and implements a voltage gain of 4.

How the DC/DC converter shown in FIG. 10 implements the voltage gain of 4 is understood from an energy conservation perspective.

During specific implementation, when each resonance unit is in the first resonance state, a voltage between the first port 711 of the first resonance unit 71 and the third port 733 of the third resonance unit 73 is $V_{in10}$ - $V_{out10}$. When each resonance unit is in the second resonance state, a voltage between the second port and the fourth port of each resonance unit is $V_{in10}$. Energy obtained by the first inductor and the second capacitor of each resonance unit during charging is equal to energy provided by the first inductor and the second capacitor of each resonance unit during discharging. In this case, the following formula exists:

$$(V_{in10} - V_{out10}) \times I_4 \ = \ V_{in10} \times 3I_4 \qquad \text{formula 5}$$

$I_4$ is a current that flows through the first inductor and the second capacitor of each resonance unit.

The following can be learned according to formula 5: $4V_{in10} = V_{out10}$. To be specific, the voltage gain of the DC/DC converter shown in FIG. 10 is 4.

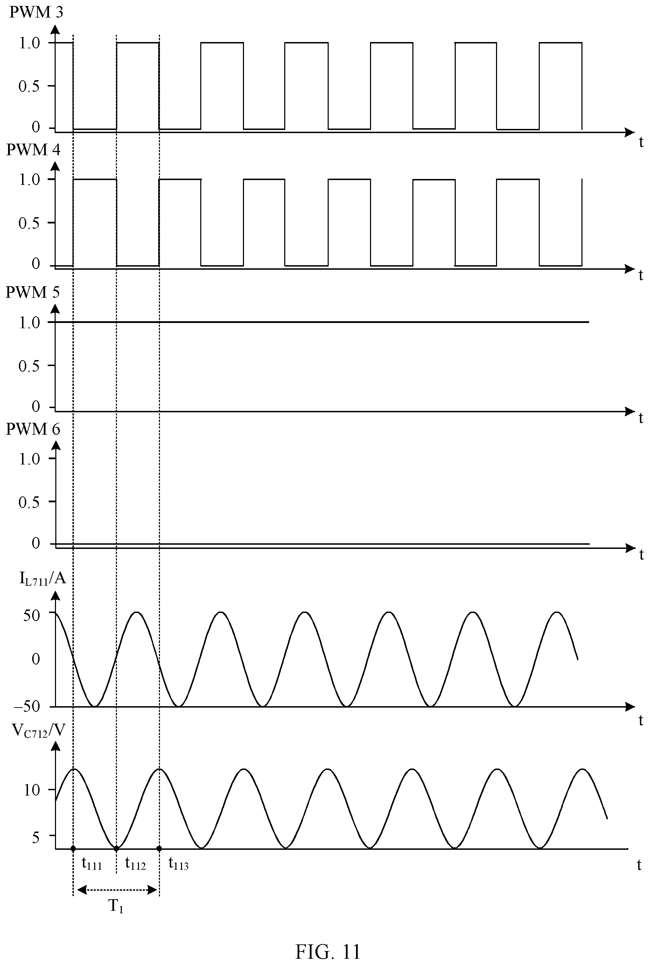

Optionally, in some feasible implementations, FIG. 11 is a diagram of another control signal used to control a DC/DC converter according to an embodiment of this application. The control signal shown in FIG. 11 may be used to control the first resonance unit 71, the second resonance unit 72, and the third resonance unit 73 shown in FIG. 7. During specific implementation, the controller sends a control signal PWM 3 shown in FIG. 11 to the first switch $Q_{711}$ and the third switch $Q_{713}$ of the first resonance unit 71, sends a control signal PWM 4 shown in FIG. 11 to the second switch $Q_{712}$ and the fourth switch $Q_{714}$ of the first resonance unit 71, sends a control signal PWM 5 to the first switch $Q_{721}$ and the second switch $Q_{722}$ of the second resonance unit 72 and the first switch $Q_{731}$ and the second switch $Q_{732}$ of the

third resonance unit 73, and sends a control signal PWM 6 to the third switch $Q_{723}$ and the fourth switch $Q_{724}$ of the second resonance unit 72 and the third switch $Q_{733}$ and the fourth switch $Q_{734}$ of the third resonance unit 73. In other words, the first switch $Q_{721}$ and the second switch $Q_{722}$ of the second resonance unit 72 and the first switch $Q_{731}$ and the second switch $Q_{732}$ of the third resonance unit 73 are always turned on, and the third switch $Q_{723}$ and the fourth switch $Q_{724}$ of the second resonance unit 72 and the third switch $Q_{733}$ and the fourth switch $Q_{734}$ of the third resonance unit 73 are always turned off. In general, the second resonance unit 72 and the third resonance unit 73 are in a short-circuited state.

Optionally, a duty cycle of each of the control signal PWM 3 and the control signal PWM 4 is 50%. In other words, duration of a time period from $t_{111}$ to $t_{112}$ is equal to duration of a time period from $t_{112}$ to $t_{113}$.

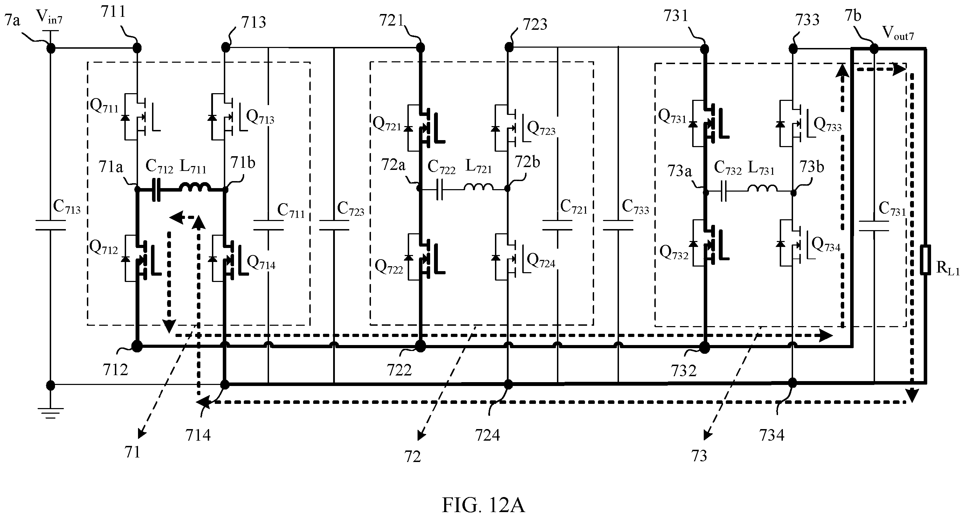

In the time period from $t_{111}$ to $t_{112}$, the control signal PWM 3 controls the first switch $Q_{711}$ and the third switch $Q_{713}$ of the first resonance unit 71 to turn off, and the control signal PWM 4 controls the second switch $Q_{712}$ and the fourth switch $Q_{714}$ of the first resonance unit 71 to turn on. In this case, the first resonance unit 71 is in the second resonance state. In addition, the control signal PWM 5 controls all of the first switch $Q_{721}$ and the second switch $Q_{722}$ of the second resonance unit 72 and the first switch $Q_{731}$ and the second switch $Q_{732}$ of the third resonance unit 73 to turn on, and the control signal PWM 6 controls all of the third switch $Q_{723}$ and the fourth switch $Q_{724}$ of the second resonance unit 72 and the third switch $Q_{733}$ and the fourth switch $Q_{734}$ of the third resonance unit 73 to turn off. In this case, for an equivalent circuit diagram of the DC/DC converter, refer to FIG. 12A. As shown in FIG. 12A, the first inductor $L_{711}$ and the second capacitor $C_{712}$ in the first resonance unit 71 form a discharge loop by using the load $R_{L1}$ connected to the output terminal $V_{out7}$.

In other words, in the time period from $t_{111}$ to $t_{112}$, the first resonance unit 71 is in the second resonance state, and the second resonance unit 72 and the third resonance unit 73 do not generate resonance, and the second resonance unit 72 and the third resonance unit 73 are in the short-circuited state. In this case, the first inductor $L_{711}$ and the second capacitor $C_{712}$ in the first resonance unit 71 are in the discharging state, a voltage $V_{C712}$ of the second capacitor $C_{712}$ decreases, and a current $I_{L711}$ of the first inductor $L_{711}$ first increases and then decreases.

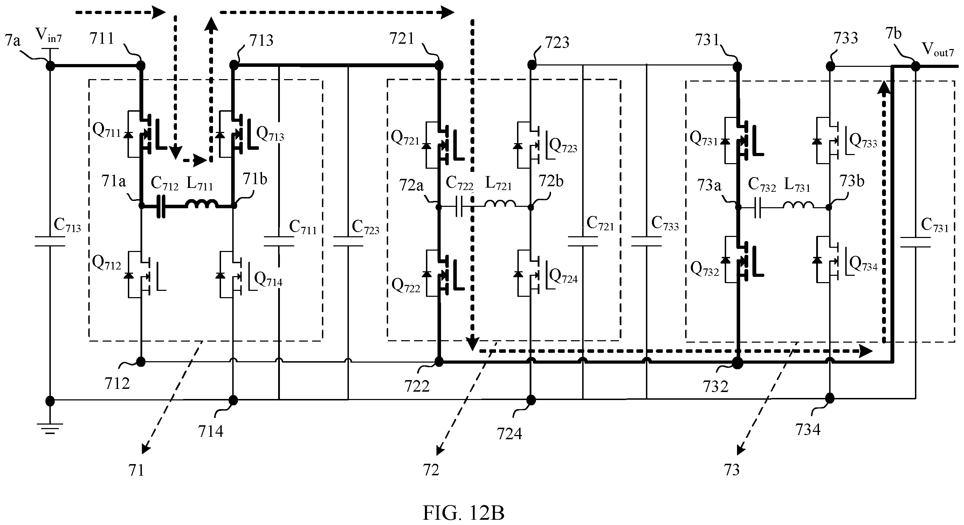

In the time period from $t_{112}$ to $t_{113}$, the control signal PWM 3 controls the first switch $Q_{711}$ and the third switch $Q_{713}$ of the first resonance unit 71 to turn on, and the control signal PWM 4 controls the second switch $Q_{712}$ and the fourth switch $Q_{714}$ of the first resonance unit 71 to turn off. In this case, the first resonance unit 71 is in the first resonance state. In addition, the control signal PWM 5 controls all of the first switch $Q_{721}$ and the second switch $Q_{722}$ of the second resonance unit 72 and the first switch $Q_{731}$ and the second switch $Q_{732}$ of the third resonance unit 73 to turn on, and the control signal PWM 6 controls all of the third switch $Q_{723}$ and the fourth switch $Q_{724}$ of the second resonance unit 72 and the third switch $Q_{733}$ and the fourth switch $Q_{734}$ of the third resonance unit 73 to turn off. In this case, for an equivalent circuit diagram of the DC/DC converter, refer to FIG. 12B. As shown in FIG. 12B, the output current of the power supply $V_{in7}$ sequentially passes through the first switch $Q_{711}$, the second capacitor $C_{712}$, the first inductor $L_{711}$, the third switch $Q_{713}$, the first switch $Q_{721}$, and the second switch $Q_{722}$, and reaches the output terminal $V_{out7}$. In general, the power supply $V_{in7}$ charges the first inductor $L_{711}$ and the second capacitor $C_{712}$ of the first resonance unit 71.

In other words, in the time period from $t_{112}$ to $t_{113}$, the first resonance unit 71 is in the first resonance state, and the second resonance unit 72 and the third resonance unit 73 do not generate resonance, and the second resonance unit 72 and the third resonance unit 73 are in the short-circuited state. In this case, the first inductor $L_{711}$ and the second capacitor $C_{712}$ in the first resonance unit 71 are in the charging state, the voltage $V_{C712}$ of the second capacitor $C_{712}$ increases, and the current $I_{L711}$ of the first inductor $L_{711}$ first increases and then decreases.

It may be understood that the time period from $t_{111}$ to $t_{112}$ and the time period from $t_{112}$ to $t_{113}$ are one operating cycle T1 of the first resonance unit 71. Optionally, T1 may be related to the first inductor $L_{711}$ and the second capacitor $C_{712}$, and is represented by using a formula as follows:

$$\text{T1} = 2\pi\sqrt{L_1 \times C_1} \qquad \text{formula 6}$$

$L_1$ is an inductance of the first inductor $L_{711}$, and $C_1$ is a capacitance of the second capacitor $C_{712}$.

Optionally, inductances of the first inductors in all resonance units may be equal, and capacitances of the second capacitors in all the resonance units may be equal.

It may be learned that, in this case, the control signal in FIG. 11 is used to control the DC/DC converter shown in FIG. 7, so that the first resonance unit 71 can be switched between the first resonance state and the second resonance state, and the second resonance unit and the second resonance unit can be short-circuited and no resonance is generated. In this case, a proportional relationship between the input voltage and the output voltage of the DC/DC converter in FIG. 7 is the same as that implemented in FIG. 3 above. For an input voltage waveform, refer to FIG. 5A. For an output voltage waveform, refer to FIG. 5B. In other words, the DC/DC converter provided in this embodiment of this application can also implement a voltage gain of 1/2.

Optionally, in some feasible implementations, the controller may alternatively control the first resonance unit 71 and the second resonance unit 72 to be switched between the first resonance state and the second resonance state and the third resonance unit 73 to be short-circuited. During specific implementation, to be specific, the controller sends the control signal PWM 3 shown in FIG. 11 to the first switch $Q_{711}$ and the third switch $Q_{713}$ of the first resonance unit 71 and to the first switch $Q_{721}$ and the third switch $Q_{723}$ of the second resonance unit 72; sends the control signal PWM 4 shown in FIG. 11 to the second switch $Q_{712}$ and the fourth switch $Q_{714}$ of the first resonance unit 71 and to the second switch $Q_{722}$ and the fourth switch $Q_{724}$ of the second resonance unit 72; and sends the control signal PWM 5 to the first switch $Q_{731}$ and the second switch $Q_{732}$ of the third resonance unit 73, and sends the control signal PWM 6 to the third switch $Q_{733}$ and the fourth switch $Q_{734}$ of the third resonance unit 73. In other words, the first switch $Q_{731}$ and the second switch $Q_{732}$ of the third resonance unit 73 are always turned on, and the third switch $Q_{733}$ and the fourth switch $Q_{734}$ of the third resonance unit 73 are always turned off. In general, the third resonance unit 73 is in the short-circuited state.

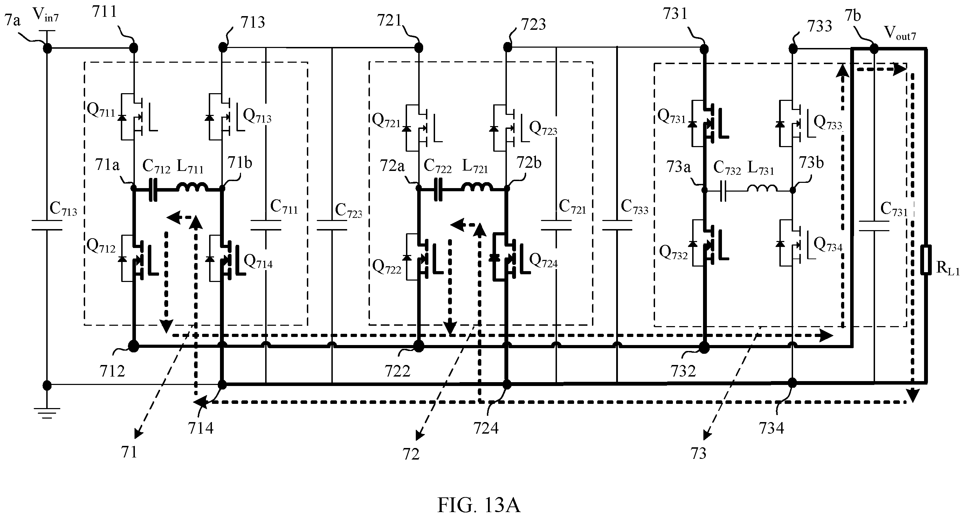

In this case, in the time period from $t_{111}$ to $t_{112}$, all of the first switch $Q_{711}$ and the third switch $Q_{713}$ of the first resonance unit 71 and the first switch $Q_{721}$ and the third switch $Q_{723}$ of the second resonance unit 72 are turned off, and all of the second switch $Q_{712}$ and the fourth switch $Q_{714}$ of the first resonance unit 71 and the second switch $Q_{722}$ and the fourth switch $Q_{724}$ of the second resonance unit 72 are turned on. In this case, the first resonance unit 71 and the second resonance unit 72 are in the second resonance state. In addition, the first switch $Q_{731}$ and the second switch $Q_{732}$ of the third resonance unit 73 are turned on, and the third switch $Q_{733}$ and the fourth switch $Q_{734}$ of the third resonance unit 73 are turned off. In this case, for an equivalent circuit diagram of the DC/DC converter, refer to FIG. 13A. As shown in FIG. 13A, the first inductor $L_{711}$ and the second capacitor $C_{712}$ in the first resonance unit 71 and the first inductor $L_{721}$ and the second capacitor $C_{722}$ in the second resonance unit 72 form a parallel discharge loop by using the load $R_{L1}$ connected to the output terminal $V_{out7}$.

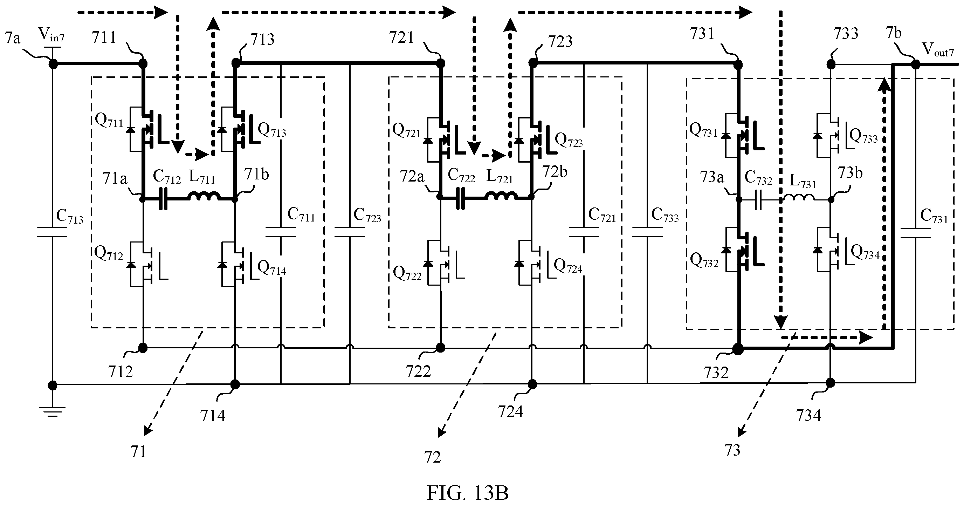

In the time period from $t_{112}$ to $t_{113}$, all of the first switch $Q_{711}$ and the third switch $Q_{713}$ of the first resonance unit 71 and the first switch $Q_{721}$ and the third switch $Q_{723}$ of the second resonance unit 72 are turned on, and all of the second switch $Q_{712}$ and the fourth switch $Q_{714}$ of the first resonance unit 71 and the second switch $Q_{722}$ and the fourth switch $Q_{724}$ of the second resonance unit 72 are turned off. In this case, the first resonance unit 71 and the second resonance unit 72 are in the first resonance state. In addition, the first switch $Q_{731}$ and the second switch $Q_{732}$ of the third resonance unit 73 are turned on, and the third switch $Q_{733}$ and the fourth switch $Q_{734}$ of the third resonance unit 73 are turned off. In this case, for an equivalent circuit diagram of the DC/DC converter, refer to FIG. 13B. As shown in FIG. 13B, the output current of the power supply $V_{in7}$ sequentially passes through the first switch $Q_{711}$, the second capacitor $C_{712}$, the first inductor $L_{711}$, the third switch $Q_{713}$, the first switch $Q_{721}$, the second capacitor $C_{722}$, the first inductor $L_{721}$, the third switch $Q_{723}$, the first switch $Q_{731}$, and the second switch $Q_{732}$, and reaches the output terminal $V_{out7}$. In general, the power supply $V_{in7}$ charges the first inductor $L_{711}$ and the second capacitor $C_{712}$ of the first resonance unit 71 and the first inductor $L_{721}$ and the second capacitor $C_{722}$ of the second resonance unit 72.

In this case, the DC/DC converter provided in this embodiment of this application can implement a voltage gain of 1/3.

How equivalent circuits formed by the DC/DC converter in FIG. 13A and FIG. 13B implement the voltage gain of 1/3 is understood from an energy conservation perspective.

During specific implementation, when the first resonance unit 71 and the second resonance unit 72 are in the first resonance state and the third resonance unit 73 is in the short-circuited state, a voltage between the first port 711 of the first resonance unit 71 and the third port 733 of the third resonance unit 73 is $V_{in7}$ - $V_{out7}$. When the first resonance unit 71 and the second resonance unit 72 are in the second resonance state and the third resonance unit 73 is in the short-circuited state, a voltage between the second port and the fourth port of each resonance unit is $V_{out7}$. Energy obtained by the first inductor and the second capacitor of the first resonance unit and the first inductor and the second capacitor of the second resonance unit during charging is equal to energy provided by the first inductor and the second capacitor of the first resonance unit and the first inductor and the second capacitor of the second resonance unit during discharging. In this case, the following formula exists:

$$(V_{in7} - V_{out7}) \times I_5 \ = \ V_{in10} \times 2I_5 \qquad \text{formula 7}$$

$I_5$ is a current that flows through the first inductor and the second capacitor of each of the first resonance unit and the second resonance unit.

The following can be learned according to formula 7: $3V_{in7} = V_{out7}$. To be specific, the voltage gain of the DC/DC converter shown in FIG. 7 may be 3.

Therefore, in this embodiment of this application, different voltage gains of the DC/DC converter can be implemented in the same circuit structure, thereby improving efficiency and flexibility of switching between the voltage gains of the DC/DC converter.

The foregoing embodiment described with reference to FIG. 12A to FIG. 13B is obtained by controlling the DC/DC converter in FIG. 7 by using the control signal shown in FIG. 11. In some feasible implementations, the control signal shown in FIG. 11 may also be used to control the DC/DC converter shown in FIG. 10, to implement a voltage gain of 2 or 3.

In some feasible implementations, in the time period from $t_{111}$ to $t_{112}$, a turned-on or turned-off state of each switching transistor of each resonance unit in FIG. 10 may be specifically controlled as follows: The control signal PWM 3 controls the first switch $Q_{711}$ and the third switch $Q_{713}$ of the first resonance unit 71 to turn off, and the control signal PWM 4 controls the second switch $Q_{712}$ and the fourth switch $Q_{714}$ of the first resonance unit 71 to turn on. In this case, the first resonance unit 71 is in the second resonance state. In addition, the control signal PWM 5 controls all of the first switch $Q_{721}$ and the second switch $Q_{722}$ of the second resonance unit 72 and the first switch $Q_{731}$ and the second switch $Q_{732}$ of the third resonance unit 73 to turn on, and the control signal PWM 6 controls all of the third switch $Q_{723}$ and the fourth switch $Q_{724}$ of the second resonance unit 72 and the third switch $Q_{733}$ and the fourth switch $Q_{734}$ of the third resonance unit 73 to turn off. In this case, the second resonance unit 72 and the third resonance unit 73 are in the short-circuited state. In this case, an equivalent circuit of the DC/DC converter in FIG. 10 and an equivalent circuit shown in FIG. 12A have opposite current directions. The power supply $V_{in10}$ charges the first inductor $L_{711}$ and the second capacitor $C_{712}$ of the first resonance unit 71.

In the time period from $t_{112}$ to $t_{113}$, the turned-on or turned-off state of each switching transistor of each resonance unit in FIG. 10 may be specifically controlled as follows: The control signal PWM 3 controls the first switch $Q_{711}$ and the third switch $Q_{713}$ of the first resonance unit 71 to turn on, and the control signal PWM 4 controls the second switch $Q_{712}$ and the fourth switch $Q_{714}$ of the first resonance unit 71 to turn off. In this case, the first resonance unit 71 is in the first resonance state. In addition, the control signal PWM 5 controls all of the first switch $Q_{721}$ and the second switch $Q_{722}$ of the second resonance unit 72 and the first switch $Q_{731}$ and the second switch $Q_{732}$ of the third resonance unit 73 to turn on, and the control signal PWM 6 controls all of the third switch $Q_{723}$ and the fourth switch $Q_{724}$ of the second resonance unit 72 and the third switch $Q_{733}$ and the fourth switch $Q_{734}$ of the third resonance unit 73 to turn off. In this case, the second resonance unit 72 and the third resonance unit 73 are in the short-circuited state. The equivalent circuit diagram of the DC/DC converter and an equivalent circuit shown in FIG. 12B have opposite current directions. The first inductor $L_{711}$ and the second capacitor $C_{712}$ in the first resonance unit 71 form a discharge loop by using a load $R_{L1}$ connected to the output terminal $V_{out10}$.

In this case, the DC/DC converter provided in this embodiment of this application can also implement a voltage gain of 2.

How the DC/DC converter shown in FIG. 10 implements the voltage gain of 2 is understood from an energy conservation perspective.

During specific implementation, when the first resonance unit 71 is in the first resonance state and the second resonance unit 72 and the third resonance unit 73 are in the short-circuited state, a voltage between the first port 711 and the third port 713 of the first resonance unit 71 is $V_{in10}$ - $V_{out10}$. When the first resonance unit 71 is in the second resonance state and the second resonance unit 72 and the third resonance unit 73 are in the short-circuited state in this case, a voltage between the second port 712 and the fourth port 714 of the first resonance unit 71 is $V_{in10}$. Energy obtained by the first inductor $L_{711}$ and the second capacitor $C_{712}$ during charging is equal to energy provided by the first inductor $L_{711}$ and the second capacitor $C_{712}$ during discharging. In this case, the following formula exists:

$$(V_{in10} - V_{out10}) \times I_6 = V_{in10} \times I_6 \qquad \text{formula 8}$$

$I_6$ is a current that flows through the first inductor $L_{711}$ and the second capacitor $C_{712}$.

The following can be learned according to formula 8: $2V_{in10} = V_{out10}$. To be specific, the voltage gain of the DC/DC converter shown in FIG. 10 is 2.

Optionally, in some feasible implementations, in the time period from $t_{111}$ to $t_{112}$, a turned-on or turned-off state of each switching transistor of each resonance unit in FIG. 10 may alternatively be specifically controlled as follows: The control signal PWM 3 controls all of the first switch $Q_{711}$ and the third switch $Q_{713}$ of the first resonance unit 71 and the first switch $Q_{721}$ and the third switch $Q_{721}$ of the second resonance unit 72 to turn off; and the control signal PWM 4 controls the second switch $Q_{712}$ and the fourth switch $Q_{714}$ of the first resonance unit 71 and the second switch $Q_{722}$ and the fourth switch $Q_{724}$ of the second resonance unit 72 to turn on. In this case, the first resonance unit 71 and the second resonance unit 72 are in the second resonance state. In addition, the control signal PWM 5 controls both of the first switch $Q_{731}$ and the second switch $Q_{732}$ of the third resonance unit 73 to turn on, and the control signal PWM 6 controls the third switch $Q_{733}$ and the fourth switch $Q_{734}$ of the third resonance unit 73 to turn off. In this case, the third resonance unit 73 is in the short-circuited state. In this case, an equivalent circuit of the DC/DC converter in FIG. 10 and an equivalent circuit shown in FIG. 13A have opposite current directions. The power supply $V_{in10}$ charges the first inductor $L_{711}$ and the second capacitor $C_{712}$ of the first resonance unit 71 and the first inductor $L_{721}$ and the second capacitor $C_{722}$ of the second resonance unit 72.

In the time period from $t_{112}$ to $t_{113}$, the turned-on or turned-off state of each switching transistor of each resonance unit in FIG. 10 may be specifically controlled as follows: The control signal PWM 3 controls all of the first switch $Q_{711}$ and the third switch $Q_{713}$ of the first resonance unit 71 and the first switch $Q_{721}$ and the third switch $Q_{721}$ of the second resonance unit 72 to turn on; and the control signal PWM 4 controls the second switch $Q_{722}$ and the fourth switch $Q_{724}$ of the first resonance unit 71 and the second switch $Q_{722}$ and the fourth switch $Q_{724}$ of the second resonance unit 72 to turn off. In this case, the first resonance unit 71 and the second resonance unit 72 are in the first resonance state. In addition, the control signal PWM 5 controls both of the first switch $Q_{731}$ and the second switch $Q_{732}$ of the third resonance unit 73 to turn on, and the control signal PWM 6 controls the third switch $Q_{733}$ and the fourth switch $Q_{734}$ of the third resonance unit 73 to turn off. In this case, the third resonance unit 73 is in the short-circuited state. In this case, the equivalent circuit of the DC/DC converter in FIG. 10 and an equivalent circuit shown in FIG. 13A have opposite current directions. The first inductor $L_{711}$ and the second capacitor $C_{712}$ in the first resonance unit 71 and the first inductor $L_{721}$ and the second capacitor $C_{722}$ in the second resonance unit 72 form a parallel discharge loop by using a load $R_{L1}$ connected to the output terminal $V_{out7}$.

In this case, the DC/DC converter provided in this embodiment of this application can implement a voltage gain of 3.

How the DC/DC converter shown in FIG. 10 implements the voltage gain of 3 is understood from an energy conservation perspective.

During specific implementation, when the first resonance unit 71 and the second resonance unit 72 are in the first resonance state and the third resonance unit 73 is in the short-circuited state, a voltage between the first port 711 and the third port 713 of the first resonance unit 71 is $V_{in10}$ - $V_{out10}$. When the first resonance unit 71 and the second resonance unit 72 are in the second resonance state and the third resonance unit 73 is in the short-circuited state, a voltage between the second port 712 and the fourth port 714 of the first resonance unit 71 is $V_{in10}$. Energy obtained by the first inductor and the second capacitor of the first resonance unit and the first inductor and the second capacitor of the second resonance unit during charging is equal to energy provided by the first inductor and the second capacitor of the first resonance unit and the first inductor and the second capacitor of the second resonance unit during discharging. In this case, the following formula exists:

$$(V_{in10} - V_{out10}) \times I_7 \ = \ V_{in10} \times 2I_7 \qquad \text{formula 9}$$

$I_7$ is a current that flows through the first inductor and the second capacitor of the first resonance unit and the first inductor and the second capacitor of the second resonance unit.

The following can be learned according to formula 9: $3V_{in10}$ = $V_{out10}$. To be specific, the voltage gain of the DC/DC converter shown in FIG. 10 is 3.

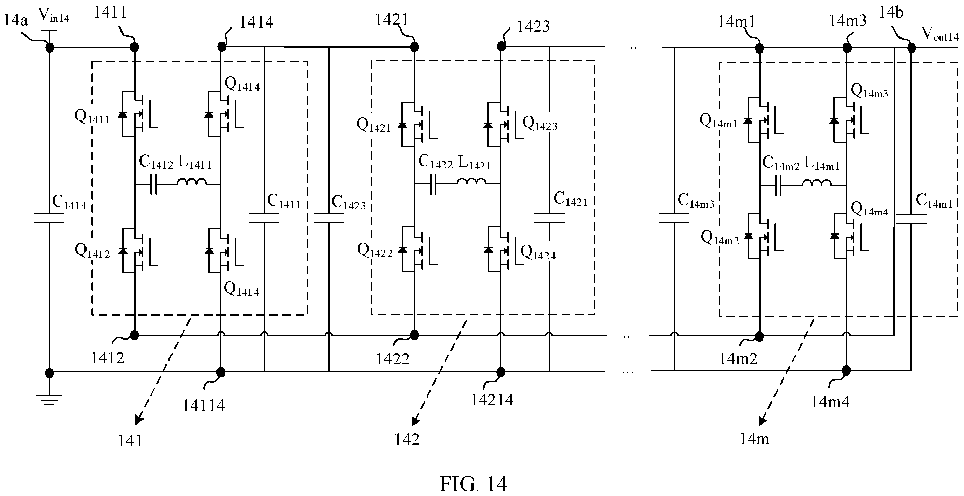

Optionally, in some feasible implementations, FIG. 14 is another circuit diagram of a DC/DC converter according to an embodiment of this application. As shown in FIG. 14, the DC/DC converter in this embodiment of this application includes M resonance units, and the M resonance units include a first resonance unit 141 and an $M^{th}$ resonance unit 14m. M is greater than or equal to 2.

A connection relationship between the resonance units may be specifically implemented as follows: A first port 1411 of the first resonance unit 141 is connected to a first terminal 14a of the DC/DC converter, a third port 1413 of the first resonance unit 141 is connected to a first port 1421 of a second resonance unit 142, and so on, until a third port 14m3 of the $M^{th}$ resonance unit 14m is connected to a second terminal 14b of the DC/DC converter. Therefore, in general, a first port 14m1 of the $M^{th}$ resonance unit 14m is connected to a third port of an (M-1)$^{th}$ resonance unit.

In addition, a second port of each of the M resonance units (for example, a second port 1412 of the first resonance unit 141, a second port 1422 of the second resonance unit 142, and a second port 14m2 of the $M^{th}$ resonance unit 14m) and the $M^{th}$ resonance unit are connected to the second terminal 14b of the DC/DC converter; and a fourth port of each of the M resonance units (for example, a fourth port 1414 of the first resonance unit 141, a fourth port 1424 of the second resonance unit 142, and a fourth port 14m4 of the $M^{th}$ resonance unit 14m) is connected to a reference ground.

The first terminal 14a of the DC/DC converter shown in FIG. 14 is connected to a power supply $V_{in14}$, and the second terminal 3b of the DC/DC converter is connected to an output terminal $V_{out14}$, in other words, the first terminal 14a of the DC/DC converter is an input terminal and the second terminal 14b of the DC/DC converter is an output terminal.

Optionally, in some feasible implementations, the control signal shown in FIG. 4 may be used to control the resonance units in FIG. 14. During specific implementation, in a first time period of a first operating cycle of the DC/DC converter, a controller sends the control signal PWM 1 to first switches (for example, a first switch $Q_{1411}$, a first switch $Q_{1421}$, and a first switch $Q_{14m1}$) and third switches (for example, a third switch $Q_{1413}$, a third switch $Q_{1422}$, and a third switch $Q_{141m13}$) of the resonance units, so that each resonance unit is in a first resonance state. In a second time period of the first operating cycle of the DC/DC converter, the controller sends the control signal PWM 2 to second switches (for example, a second switch $Q_{1412}$, a second switch $Q_{1422}$, and a second switch $Q_{14m2}$) and fourth switches (for example, a fourth switch $Q_{1414}$, a fourth switch $Q_{1424}$, and a fourth switch $Q_{14m4}$) of the resonance units, so that each resonance unit is in a second resonance state.

In this case, in the first operating cycle of the DC/DC converter, a voltage gain of the DC/DC converter may be 1/(M+1), and M is a quantity of resonance units in the DC/DC converter.

How the DC/DC converter shown in FIG. 14 implements the voltage gain of 1/(M+1) is understood from an energy conservation perspective.

During specific implementation, when each resonance unit is in the first resonance state, a voltage between the first port 1411 of the first resonance unit 141 and the third port 14m3 of the $M^{th}$ resonance unit 14m is $V_{in14}$ - $V_{out14}$. When each resonance unit is in the second resonance state, a voltage between the second port and the fourth port of each resonance unit is $V_{out14}$. Energy obtained by first inductors and second capacitors of all the resonance units during charging is equal to energy provided by the first inductors and the second capacitors of all the resonance units during discharging. In this case, the following formula exists:

$$(V_{in14} - V_{out14}) \times I_8 \ = \ V_{out14} \times MI_8 \qquad \text{formula 10}$$

$I_8$ is a current that flows through the first inductor and the second capacitor of each resonance unit.

The following can be learned according to formula 10: $V_{in14} = (M + 1)V_{out14}$. To be specific, the voltage gain of the DC/DC converter shown in FIG. 14 is 1/(M+1).

Optionally, in some feasible implementations, the control signal shown in FIG. 11 may be used to control the resonance units in FIG. 14.

During specific implementation, in a third time period of a second operating cycle of the DC/DC converter, the controller sends the control signal PWM 1 to the first resonance unit 141 and all resonance units disposed between the first resonance unit and a $K^{th}$ resonance unit, so that the first resonance unit 141 and all the resonance units disposed between the first resonance unit 141 and the $K^{th}$ resonance unit are in the first resonance state; in a fourth time period of the second operating cycle of the DC/DC converter, the controller sends the control signal PWM 2 to the first resonance unit 141 and all the resonance units disposed between the first resonance unit 141 and the $K^{th}$ resonance unit, so that the first resonance unit 141 and all the resonance units disposed between the first resonance unit 141 and the $K^{th}$ resonance unit are in the second resonance state; and K is less than or equal to M.

In addition, in the second operating cycle of the DC/DC converter, the $K^{th}$ resonance unit and all resonance units disposed between the $K^{th}$ resonance unit and the $M^{th}$ resonance unit 14m are in the short-circuited state. In this case, in the second operating cycle of the DC/DC converter, a voltage gain of the DC/DC converter may be implemented as 1/K.

How the DC/DC converter shown in FIG. 14 implements the voltage gain of 1/K is understood from an energy conservation perspective.

During specific implementation, when the first resonance unit 141 and all the resonance units disposed between the first resonance unit 141 and the $K^{th}$ resonance unit are in the first resonance state, a voltage between the first port 1411 of the first resonance unit 141 and a third port of a $(K-1)^{th}$ resonance unit is $V_{in14}$ - $V_{out14}$. When the first resonance unit 141 and all the resonance units disposed between the first resonance unit 141 and the $K^{th}$ resonance unit are in the second resonance state, a voltage between the second port 1412 and the fourth port 1414 of the first resonance unit 141 and a voltage between the second port and the fourth port of each of all the resonance units disposed between the first resonance unit 141 and the $K^{th}$ resonance unit each are $V_{out14}$. Energy obtained by first inductors and second capacitors of all the resonance units during charging is equal to energy provided by the first inductors and the second capacitors of all the resonance units during discharging. In this case, the following formula exists:

$$(V_{in14} - V_{out14}) \times I_9 \ = \ V_{out14} \times (K - 1)I_9 \qquad \text{formula 11}$$

$I_9$ is a current that flows through the first inductor and the second capacitor of each resonance unit.

The following can be learned according to formula 11: $V_{in14} = KV_{out14}$. To be specific, the voltage gain of the DC/DC converter shown in FIG. 14 is 1/K.

In general, in this embodiment of this application, different switches between the resonance units are turned on or turned off, so that a voltage gain of the DC/DC converter can be switched in a range of 1/(M+1) to 1/K.

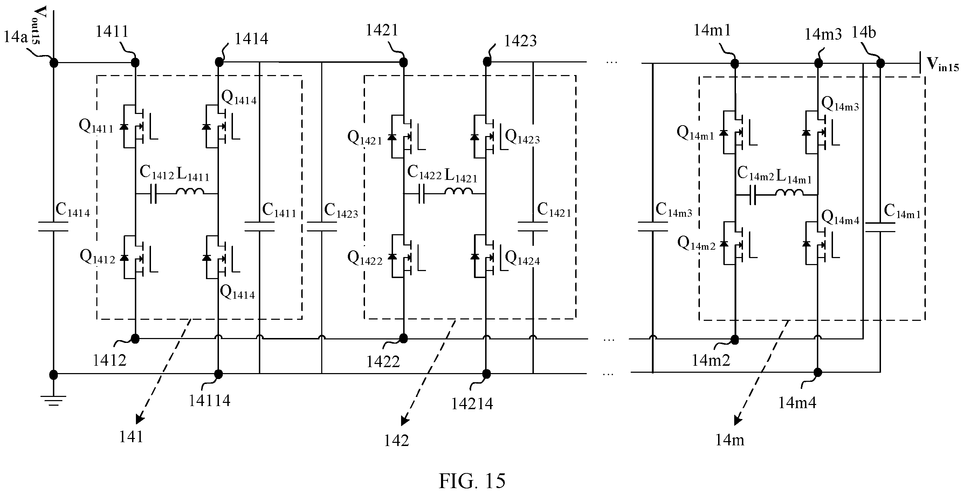

The output terminal and the input terminal of the DC/DC converter shown in FIG. 14 are interchanged to obtain a DC/DC converter shown in FIG. 15. As shown in FIG. 15, the first terminal 14a of the DC/DC converter is connected to an output terminal $V_{out15}$, and the second terminal 3b of the DC/DC converter is connected to a power supply $V_{in15}$, in other words, the first terminal 14a of the DC/DC converter is an output terminal and the second terminal 14b of the DC/DC converter is an input terminal.

Optionally, in some feasible implementations, the control signal shown in FIG. 4 may be used to control the resonance units in FIG. 15. During specific implementation, in a first time period of a first operating cycle of the DC/DC converter, a controller sends the control signal PWM 1 to first switches (for example, a first switch $Q_{1411}$, a first switch $Q_{1421}$, and a first switch $Q_{14m1}$) and third switches (for example, a third switch $Q_{1413}$, a third switch $Q_{1422}$, and a third switch $Q_{14m3}$) of the resonance units, so that each resonance unit is in a first resonance state. In a second time period of the first operating cycle of the DC/DC converter, the controller sends the control signal PWM 2 to second switches (for example, a second switch $Q_{1412}$, a second switch $Q_{1422}$, and a second switch $Q_{14m2}$) and fourth switches (for example, a fourth switch $Q_{1414}$, a fourth switch $Q_{1424}$, and a fourth switch $Q_{14m4}$) of the resonance units, so that each resonance unit is in a second resonance state.

In this case, in the first operating cycle of the DC/DC converter, a voltage gain of the DC/DC converter may be M+1, and M is a quantity of resonance units in the DC/DC converter.

How the DC/DC converter shown in FIG. 15 implements the voltage gain of M+1 is understood from an energy conservation perspective.

During specific implementation, when each resonance unit is in the first resonance state, a voltage between the first port 1411 of the first resonance unit 141 and the third port 14m3 of the $M^{th}$ resonance unit 14m is $V_{in15}$ - $V_{out15}$. When each resonance unit is in the second resonance state, a voltage between the second port and the fourth port of each resonance unit is $V_{in15}$, Energy obtained by first inductors and second capacitors of all the resonance units during charging is equal to energy provided by the first inductors and the second capacitors of all the resonance units during discharging. In this case, the following formula exists:

$$(V_{in15} - V_{out15}) \times I_{10} = V_{in15} \times MI_{10} \qquad \text{formula 12}$$

$I_{10}$ is a current that flows through the first inductor and the second capacitor of each resonance unit.

The following can be learned according to formula 12: $V_{out15} = (M + 1)V_{in15}$. To be specific, the voltage gain of the DC/DC converter shown in FIG. 15 is M+1.

Optionally, in some feasible implementations, the control signal shown in FIG. 11 may be used to control the resonance units in FIG. 15.

During specific implementation, in a third time period of a second operating cycle of the DC/DC converter, the controller sends the control signal PWM 1 to the first resonance unit 141 and all resonance units disposed between the first resonance unit and a $K^{th}$ resonance unit, so that the first resonance unit 141 and all the resonance units disposed between the first resonance unit 141 and the $K^{th}$ resonance unit are in the first resonance state; in a fourth time period of the second operating cycle of the DC/DC converter, the controller sends the control signal PWM 2 to the first resonance unit 141 and all the resonance units disposed between the first resonance unit 141 and the $K^{th}$ resonance unit, so that the first resonance unit 141 and all the resonance units disposed between the first resonance unit and the $K^{th}$ resonance unit are in the second resonance state; and K is less than or equal to M.

In addition, in the second operating cycle of the DC/DC converter, the $K^{th}$ unit and all resonance units disposed between the $K^{th}$ resonance unit and the $M^{th}$ resonance unit 14m are in the short-circuited state. In this case, in the second operating cycle of the DC/DC converter, a voltage gain of the DC/DC converter may be implemented as K.

In general, in this embodiment of this application, different switches between the resonance units are turned on or turned off, so that a voltage gain of the DC/DC converter can be switched in a range of K to (M+1).

How the DC/DC converter shown in FIG. 15 implements the voltage gain of K is understood from an energy conservation perspective.

During specific implementation, when the first resonance unit 141 and all the resonance units disposed between the first resonance unit 141 and the $K^{th}$ resonance unit are in the first resonance state, a voltage between the first port 1411 of the first resonance unit 141 and a third port of a $(K-1)^{th}$ resonance unit is $V_{in15}$ - $V_{out15}$, When the first resonance unit 141 and all the resonance units disposed between the first resonance unit 141 and the $K^{th}$ resonance unit are in the second resonance state, a voltage between the second port 1412 and the fourth port 1414 of the first resonance unit 141 and a voltage between the second port and the fourth port of each of all the resonance units disposed between the first resonance unit 141 and the $K^{th}$ resonance unit each are $V_{in15}$. Energy obtained by first inductors and second capacitors of all the resonance units during charging is equal to energy provided by the first inductors and the second capacitors of all the resonance units during discharging. In this case, the following formula exists:

$$(V_{in15} - V_{out1}) \times I_{11} = V_{in15} \times (K - 1)I_{11} \qquad \text{formula 13}$$

$I_{11}$ is a current that flows through the first inductor and the second capacitor of each resonance unit.

The following can be learned according to formula 13: $V_{out15} = KV_{in15}$. To be specific, the voltage gain of the DC/DC converter shown in FIG. 15 is K.

It should be noted that, the terms "first" and "second" are used only for descriptive purposes and cannot be construed as indicating or implying relative importance.

The foregoing descriptions are merely specific implementations of the present invention, and are not intended to limit the protection scope of the present invention. The modifications or replacements readily figured out by a person skilled in the art within the technical scope disclosed in the present invention shall all fall within the protection scope of the present invention. Therefore, the protection scope of the present invention shall be subject to the protection scope of the claims.

**Claims**

1. A DC/DC conversion circuit, wherein the DC/DC conversion circuit comprises a first terminal, a second terminal, and a first resonance unit, and the first resonance unit has a first port, a second port, a third port, and a fourth port, wherein

   the first port of the first resonance unit is connected to the first terminal of the DC/DC conversion circuit, and the second port of the first resonance unit and the third port of the first resonance unit are connected to the second terminal of the DC/DC conversion circuit; and the fourth port of the first resonance unit is connected to a reference ground of the DC/DC conversion circuit;
   the first resonance unit comprises a first switch bridge arm, a second switch bridge arm, a first capacitor, and a resonance bridge; and the resonance bridge is connected between a midpoint of the first switch bridge arm and a midpoint of the second switch bridge arm;
   one end of the first switch bridge arm of the first resonance unit is connected to the first port of the first resonance unit, and the other end of the first switch bridge arm of the first resonance unit is connected to the second port of the first resonance unit; and one end of the second switch bridge arm of the first resonance unit is connected to the third port of the first resonance unit, and the other end of the second switch bridge arm of the first resonance unit is connected to the fourth port of the first resonance unit; and
   the first capacitor of the first resonance unit is connected between the third port of the first resonance unit and the fourth port of the first resonance unit.

2. The DC/DC conversion circuit according to claim 1, wherein the first switch bridge arm comprises a first switch unit and a second switch unit connected in series to the first switch unit; and the second switch bridge arm comprises a third switch unit and a fourth switch unit connected in series to the third switch unit;

   when the first switch unit and the third switch unit are turned on and the second switch unit and the fourth switch unit are turned off, the first resonance unit is in a first resonance state; and
   when the first switch unit and the third switch unit are turned off and the second switch unit and the fourth switch unit are turned on, the first resonance unit is in a second resonance state.

3. The DC/DC conversion circuit according to claim 2, wherein a first operating cycle of the DC/DC conversion circuit comprises a first time period and a second time period; in the first time period, the first resonance unit is in the first resonance state; and in the second time period, the first resonance unit is in the second resonance state; and

   when the first terminal of the DC/DC conversion circuit is an input terminal and the second terminal of the DC/DC conversion circuit is an output terminal, a voltage gain of the DC/DC conversion circuit in the first operating cycle is 1/2; or
   when the first terminal of the DC/DC conversion circuit is an output terminal and the second terminal of the DC/DC conversion circuit is an input terminal, a voltage gain of the DC/DC conversion circuit in the first operating cycle is 2.

4. The DC/DC conversion circuit according to claim 2 or 3, wherein duration of the first time period is equal to duration of the second time period.

5. A DC/DC converter, wherein the DC/DC converter comprises a first terminal, a second terminal, and M identical resonance units, and M is greater than or equal to 2; and each of the M resonance units has a first port, a second port, a third port, and a fourth port;

the first port of a first resonance unit in the resonance units is connected to the first terminal of the DC/DC converter, and the second port of each of the resonance units and the third port of an M$^{th}$ resonance unit in the resonance units are connected to the second terminal of the DC/DC converter;

the first port of the M$^{th}$ resonance unit is connected to the third port of an (M-1)$^{th}$ resonance unit; and the fourth port of each resonance unit is connected to a reference ground of the DC/DC converter;

any resonance unit in the M resonance units comprises a first switch bridge arm, a second switch bridge arm, a first capacitor, and a resonance bridge; and the resonance bridge in the any resonance unit is connected between a midpoint of the first switch bridge arm of the any resonance unit and a midpoint of the second switch bridge arm of the any resonance unit;

one end of the first switch bridge arm of the any resonance unit is connected to the first port of the any resonance unit, and the other end of the first switch bridge arm of the any resonance unit is connected to the second port of the any resonance unit; and one end of the second switch bridge arm of the any resonance unit is connected to the third port of the any resonance unit, and the other end of the second switch bridge arm of the any resonance unit is connected to the fourth port of the any resonance unit; and

the first capacitor of the any resonance unit is connected between the third port of the any resonance unit and the fourth port of the any resonance unit.

6. The DC/DC converter according to claim 5, wherein the first switch bridge arm of the any resonance unit comprises a first switch unit and a second switch unit connected in series to the first switch unit; and the second switch bridge arm of the any resonance unit comprises a third switch unit and a fourth switch unit connected in series to the third switch unit;

when the first switch unit of the any resonance unit and the third switch unit of the any resonance unit are turned on and the second switch unit of the any resonance unit and the fourth switch unit of the any resonance unit are turned off, the any resonance unit is in a first resonance state; and

when the first switch unit of the any resonance unit and the third switch unit of the any resonance unit are turned off and the second switch unit of the any resonance unit and the fourth switch unit of the any resonance unit are turned on, the any resonance unit is in a second resonance state.

7. The DC/DC converter according to claim 6, wherein a first operating cycle of the DC/DC converter comprises a first time period and a second time period; in the first time period, each of the M resonance units is in the first resonance state; and in the second time period, each resonance unit is in the second resonance state; and

when the first terminal of the DC/DC converter is an input terminal and the second terminal of the DC/DC converter is an output terminal, a voltage gain of the DC/DC converter in the first operating cycle is 1/(M+1); or

when the first terminal of the DC/DC converter is an output terminal and the second terminal of the DC/DC converter is an input terminal, a voltage gain of the DC/DC converter in the first operating cycle is M+1.

8. The DC/DC converter according to claim 6, wherein when the first switch unit of the any resonance unit and the second switch unit of the any resonance unit are turned on and the third switch unit of the any resonance unit and the fourth switch unit of the any resonance unit are turned off, the any resonance unit is in a short-circuited state.

9. The DC/DC converter according to claim 8, wherein a second operating cycle of the DC/DC converter comprises a third time period and a fourth time period; in the third time period, the first resonance unit and all resonance units disposed between the first resonance unit and a K$^{th}$ resonance unit are in the first resonance state; in the fourth time period, the first resonance unit and all the resonance units disposed between the first resonance unit and the K$^{th}$ resonance unit are in the second resonance state; and K is less than or equal to M;

in the second operating cycle of the DC/DC converter, the K$^{th}$ resonance unit and all resonance units disposed between the K$^{th}$ resonance unit and the M$^{th}$ resonance unit are in the short-circuited state; and

when the first terminal of the DC/DC converter is an input terminal and the second terminal of the DC/DC converter is an output terminal, a voltage gain of the DC/DC converter in the second operating cycle is 1/K; or

when the first terminal of the DC/DC converter is an output terminal and the second terminal of the DC/DC converter is an input terminal, a voltage gain of the DC/DC converter in the second operating cycle is K.

10. The DC/DC converter according to claim 7, wherein duration of the first time period is equal to duration of the second time period.

11. A power supply device, wherein the power supply device comprises a controller and the DC/DC conversion circuit according to any one of claims 1 to 4; and the controller is connected to each switch bridge arm in the DC/DC conversion circuit, and the controller is configured to control turn-on or turn-off of each switch bridge arm, so as to control a voltage gain of the DC/DC conversion circuit.

12. A power supply device, wherein the power supply device comprises a controller and the DC/DC converter according to any one of claims 5 to 10; and the controller is connected to each switch bridge arm in the DC/DC converter, and the controller is configured to control turn-on or turn-off of each switch bridge arm, so as to control a voltage gain of the DC/DC converter.

FIG. 1

Power supply device 20A

FIG. 2A

Power supply device 20B

| Direct-current power supply B | → | DC/DC converter 203 | → | Load B |

Controller 202B

FIG. 2B

FIG. 3

FIG. 4

FIG. 5A

FIG. 5B

FIG. 6

FIG. 7

FIG. 8A

FIG. 8B

EP 4 391 338 A1

FIG. 9A

FIG. 9B

FIG. 10

PWM 3

PWM 4

PWM 5

PWM 6

$I_{L711}/A$

$V_{C712}/V$

$t_{111}$  $t_{112}$  $t_{113}$

$T_1$

FIG. 11

FIG. 12A

FIG. 12B

EP 4 391 338 A1

FIG. 13A

FIG. 13B

EP 4 391 338 A1

FIG. 14

FIG. 15

EP 4 391 338 A1

## INTERNATIONAL SEARCH REPORT

| International application No. |
|---|
| **PCT/CN2022/096473** |

**A.    CLASSIFICATION OF SUBJECT MATTER**

H02M 3/07(2006.01)i

According to International Patent Classification (IPC) or to both national classification and IPC

**B.    FIELDS SEARCHED**

Minimum documentation searched (classification system followed by classification symbols)

H02M

Documentation searched other than minimum documentation to the extent that such documents are included in the fields searched

Electronic data base consulted during the international search (name of data base and, where practicable, search terms used)

CNABS; CNTXT; CNKI; SIPOABS; DWPI; USTXT; WOTXT; EPTXT: 华为, 谌海涛, 区寿松, 谐振, 直流, resonance, DC, STC, Switching Tank Converter

**C.    DOCUMENTS CONSIDERED TO BE RELEVANT**

| Category* | Citation of document, with indication, where appropriate, of the relevant passages | Relevant to claim No. |
|---|---|---|
| X | CN 110504836 A (HARBIN INSTITUTE OF TECHNOLOGY) 26 November 2019 (2019-11-26) description, paragraphs [0014]-[0081], and figures 1-5 | 1-12 |
| X | CN 111181393 A (DELTA ELECTRONIC ENTERPRISE MANAGEMENT (SHANGHAI) CO., LTD.) 19 May 2020 (2020-05-19) description, paragraphs [0061]-[0079], and figures 1-11 | 1-12 |
| X | CN 111164869 A (HUAWEI TECHNOLOGIES CO., LTD.) 15 May 2020 (2020-05-15) description, paragraphs [0091]-[0144], and figures 1 and 2 | 1-12 |

☐ Further documents are listed in the continuation of Box C.        ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **12 January 2023** | **19 January 2023** |

| Name and mailing address of the ISA/CN | Authorized officer |
|---|---|
| **China National Intellectual Property Administration (ISA/ CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/096473**

| Patent document cited in search report | | | Publication date (day/month/year) | Patent family member(s) | | | Publication date (day/month/year) |
|---|---|---|---|---|---|---|---|
| CN | 110504836 | A | 26 November 2019 | CN | 110504836 | B | 02 February 2021 |
| CN | 111181393 | A | 19 May 2020 | US | 2020153331 | A1 | 14 May 2020 |
| | | | | US | 11152853 | B2 | 19 October 2021 |
| | | | | CN | 111181393 | B | 26 October 2021 |
| | | | | CN | 113726161 | A | 30 November 2021 |
| CN | 111164869 | A | 15 May 2020 | WO | 2019145015 | A1 | 01 August 2019 |
| | | | | US | 2020412239 | A1 | 31 December 2020 |
| | | | | EP | 3735738 | A1 | 11 November 2020 |
| | | | | US | 2022302831 | A1 | 22 September 2022 |
| | | | | US | 11316426 | B2 | 26 April 2022 |

Form PCT/ISA/210 (patent family annex) (January 2015)